(19) Europäisches Patentamt
European Patent Office
Office européen des brevets

(11) **EP 4 579 784 A1**

(12) **EUROPEAN PATENT APPLICATION**
published in accordance with Art. 153(4) EPC

(43) Date of publication:
02.07.2025 Bulletin 2025/27

(21) Application number: 23920335.9

(22) Date of filing: 06.02.2023

(51) International Patent Classification (IPC):
$H01M\ 4/131^{(2010.01)}$    $H01M\ 4/136^{(2010.01)}$
$H01M\ 10/058^{(2010.01)}$

(52) Cooperative Patent Classification (CPC):
H01M 4/131; H01M 4/136; H01M 10/058;
Y02E 60/10

(86) International application number:
PCT/CN2023/074662

(87) International publication number:
WO 2024/164120 (15.08.2024 Gazette 2024/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Contemporary Amperex Technology
(Hong Kong) Limited
Central and Western District (HK)

(72) Inventors:
• SHANG, Yibo
Ningde, Fujian 352100 (CN)

• PAN, Jianfu
Ningde, Fujian 352100 (CN)
• XU, Xiaofu
Ningde, Fujian 352100 (CN)
• QIN, Yiming
Ningde, Fujian 352100 (CN)
• ZHANG, Xinyu
Ningde, Fujian 352100 (CN)
• LIU, Qian
Ningde, Fujian 352100 (CN)
• YE, Yonghuang
Ningde, Fujian 352100 (CN)

(74) Representative: Gong, Jinping
CocreateIP
Neumarkter Straße 21
81673 München (DE)

(54) **SECONDARY BATTERY AND ELECTRICAL APPARATUS**

(57)    This application discloses a secondary battery and an electric apparatus. The secondary battery includes a battery housing and a positive electrode plate, a negative electrode plate, a separator, and an electrolyte that are disposed within the battery housing. The separator is arranged between the positive electrode plate and the negative electrode plate. The positive electrode plate includes a positive electrode active material layer, and the positive electrode active material layer includes a first positive electrode active material and a second positive electrode active material. The first positive electrode active material includes $Li_aNi_bCo_cM_{1d}M_{2e}O_fR'_g$, where $0.75{\le}a{\le}1.2$, $0{<}b{<}1$, $0{<}c{<}1$, $0{<}d{<}1$, $0{\le}e{\le}0.2$, $1{\le}f{\le}2.5$, $0{\le}g{\le}1$, $f+g{\le}3$, and $M_1$ is element Mn and/or element Al. The second positive electrode active material includes $Li_{1+x}M_{3n}Mn_{1-y}A'_yP_{1-z}E_zO_4$, where $-0.100{\le}x{\le}0.100$, $0{\le}n{\le}1.1$, $0.001{\le}y{\le}1$, $0{\le}z{\le}0.100$, and A' includes one or more elements of Zn, Al, Na, K, Mg, Mo, W, Ti, V, Zr, Fe, Ga, Sn, Sb, Nb, and Ge. The secondary battery satisfies:

$$0.9 \le \frac{d_{positive}{\times}N_1 + d_{negative}{\times}N_2 + d_{separator}{\times}N_3}{d_{housing}} \le 0.95$$

## Description

### TECHNICAL FIELD

This application pertains to the field of battery technologies, and specifically, relates to a secondary battery and an electric apparatus.

### BACKGROUND

Characterized by green, environmental friendliness, high energy, low carbon, and the like, lithium-ion batteries are widely used not only in energy storage power supply systems such as hydro, thermal, wind, and solar power plants, but also in electric transportation tools such as electric bicycles, electric motorcycles, electric vehicles, and fields such as military equipment and aerospace. With the development of current society, lithium-ion batteries face increasingly high requirements, such as higher energy density, and better cycling performance and safety. Increasing the group margin of batteries is one of the common methods to improve energy density of batteries. However, when a battery has a higher in-housing group margin, the space inside the battery available for swelling of positive and negative electrode plates is correspondingly reduced. Therefore, when a battery with a high group margin is charged, a wound cell is easily subjected to severe electrolyte leakage when it is under a large squeezing force, leading to lithium precipitation and other issues, thus affecting the cycling performance and safety performance of the battery.

### SUMMARY

In view of the technical problems existing in the background, this application provides a secondary battery aiming to improve the cycling performance and safety performance of batteries with a high group margin.

To achieve the above objective, a first aspect of this application provides a secondary battery including: a battery housing and a positive electrode plate, a negative electrode plate, a separator, and an electrolyte that are disposed within the battery housing, where the separator is arranged between the positive electrode plate and the negative electrode plate, where the positive electrode plate includes a positive electrode active material layer, and the positive electrode active material layer includes a first positive electrode active material and a second positive electrode active material, where

the first positive electrode active material includes $Li_aNi_bCo_cM_{1d}M_{2e}O_fR'_g$, where $0.75 \leq a \leq 1.2$, $0 < b < 1$, $0 < c < 1$, $0 < d < 1$, $0 \leq e \leq 0.2$, $1 \leq f \leq 2.5$, $0 \leq g \leq 1$, $f+g \leq 3$, $M_1$ is element Mn and/or element Al, $M_2$ includes one or more elements of Zr, Zn, Cu, Cr, Mg, Fe, V, Ti, Sr, Sb, Y, W, and Nb, and R' includes one or more elements of N, F, S, and Cl,

the second positive electrode active material includes $Li_{1+x}M_{3n}Mn_{1-y}A'_yP_{1-z}E_zO_4$, where $-0.100 \leq x \leq 0.100$, $0 \leq n \leq 1.1$, $0.001 \leq y \leq 1$, $0 \leq z \leq 0.100$, $M_3$ includes one or more elements of Zn, Al, Na, K, Mg, Nb, Mo, and W, A' includes one or more elements of Zn, Al, Na, K, Mg, Mo, W, Ti, V, Zr, Fe, Ga, Sn, Sb, Nb, and Ge, and E includes one or more elements of B, Si, N, S, F, Cl, and Br; and

the secondary battery satisfies:

$$0.9 \leq \frac{d_{positive} \times N_1 + d_{negative} \times N_2 + d_{separator} \times N_3}{d_{housing}} \leq 0.95$$

where $d_{positive}$ represents a thickness of a single layer of positive electrode plate, measured in mm; $d_{negative}$ represents a thickness of a single layer of negative electrode plate, measured in mm; $d_{separator}$ represents a thickness of a single layer of separator, measured in mm; $d_{housing}$ represents an inner cavity thickness of the battery housing, measured in mm; $N_1$ represents a layer count of the positive electrode plate within the battery housing; $N_2$ represents a layer count of the negative electrode plate within the battery housing; and $N_3$ represents a layer count of the separator within the battery housing.

As compared with the prior art, the secondary battery of the first aspect of this application has at least the following beneficial effects: (1) The $Li_aNi_bCo_cM_{1d}M_{2e}O_fR'_g$ positive electrode active material system has small lattice shrinkage during charge. As a result, when the battery has a high group margin, electrode plate swelling at the negative electrode during charge cannot be matched, which easily leads to severe electrolyte leakage during charge, thereby causing lithium precipitation and other problems to deteriorate performance of the battery. Mixing the LiaNibCocM1dM2eOfR'g positive electrode active material system with a positive electrode active material $Li_{1+x}M_{3n}Mn_{1-y}A'_yP_{1-z}E_zO_4$ having large lattice shrinkage during charge can effectively improve lattice shrinkage of the positive electrode to match the swelling of the negative electrode, thereby avoiding as much as possible deterioration of performance of the battery and even safety problems in a case of high group margin. (2) The positive electrode active material $Li_aNi_bCo_cM_{1d}M_{2e}O_fR'_g$ helps to

improve the energy density of the battery, and mixing with the positive electrode active material $Li_{1+x}M_{3n}Mn_{1-y}A'_yP_{1-z}E_zO_4$ helps to improve the cycling performance. Flexibly adjusting the relative amounts of the two can further balance the high energy density and good cycling performance of the battery with a high group margin. (3) Controlling the group margin of the battery within the above range can further meet flatness of the negative electrode and long-term performance of the battery.

In some embodiments of this application, the second positive electrode active material includes a positive electrode active material that satisfies at least one of the following conditions: (i) y=1, and n=0, where the second positive electrode active material is $Li_{1+x}A'P_{1-z}E_zO_4$, where A' is element Fe, or A' is element Fe and one or more elements of Zn, Al, Na, K, Mg, Mo, W, Ti, V, Zr, Fe, Ga, Sn, Sb, Nb, and Ge; (ii) 0.001≤y≤0.500, and n=0, where the second positive electrode active material is $Li_{1+x}Mn_{1-y}A'_yP_{1-z}E_zO_4$, and (iii) 0.001≤y≤0.500, and 0.9≤n≤1.1, where the second positive electrode active material is $Li_{1+x}M_{3n}Mn_{1-y}A'_yP_{1-z}E_zO_4$.

In some embodiments of this application, $$0.91 \leq \frac{d_{\text{positive}} \times N_1 + d_{negaive} \times N_2 + d_{separator} \times N_3}{d_{housing}} \leq 0.94$$ . 0.94. Making the group margin of the secondary battery further meet the given range can further balance the energy density and good cycling performance of the secondary battery.

In some embodiments of this application, 0.11 mm≤$d_{positive}$≤0.16 mm, optionally 0.12 mm≤$d_{positive}$≤0.14 mm; and 0.15 mm≤$d_{negative}$≤0.20 mm, optionally 0.16 mm≤$d_{negative}$≤0.18 mm. With the thickness of a single layer of positive electrode plate and the thickness of a single layer of negative electrode plate controlled within the above ranges respectively, it is possible to balance the high capacity, cycling performance, and rate performance of the secondary battery. This is conducive to improving the discharge current and fast charge performance of the battery.

In some embodiments of this application, 0.009 mm≤$d_{separator}$≤0.014 mm, optionally 0.0011 mm≤$d_{separator}$≤0.012 mm. Controlling the thickness of a single layer of separator within the given range can not only prevent short circuits due to contact between the positive and negative electrodes, but also avoid short circuits caused when the separator is prone to piercing by burrs, particles, and dendrites, and avoid an excessively large thickness of the separator affecting the energy density of the battery.

In some embodiments of this application, when the positive electrode plate is in a fully delithiated state, the positive electrode active materials have an average lattice volume shrinkage rate of not less than 2.7%. Controlling the lattice volume shrinkage rate of the positive electrode active materials within the given range can further avoid deterioration of performance of the battery and even safety problems in a case of high group margin. This is beneficial to meeting the long-term performance of the battery.

In some embodiments of this application, when the positive electrode plate is in a fully delithiated state, the second positive electrode active material has a lattice volume shrinkage rate of 2.7% to 6.9%. Controlling the lattice volume shrinkage rate of the second positive electrode active material within the given range can further balance the cycling performance and rate performance of the secondary battery.

In some embodiments of this application, when the positive electrode plate is in a fully delithiated state, the positive electrode active materials have an average lattice volume shrinkage rate of 2.7% to 4.2%. Controlling the lattice volume shrinkage rate of the positive electrode active materials within the given range can further improve the cycling performance and rate performance of the secondary battery.

In some embodiments of this application, the active material layer of the positive electrode plate has a compacted density of 3.10 g/cm³ to 3.50 g/cm³, optionally 3.15 g/cm³ to 3.40 g/cm³, more optionally 3.15 g/cm³ to 3.35 g/cm³. Controlling the compacted density of the active material layer of the positive electrode plate within the given range can alleviate polarization of the electrode plate, and enhance the cycling performance and long-term use performance of the battery with a high group margin.

In some embodiments of this application, the active material layer of the negative electrode plate has a compacted density of 1.6 g/cm³ to 1.70 g/cm³, optionally 1.64 g/cm³ to 1.69 g/cm³. Controlling the compacted density of the active material layer of the negative electrode plate within the given range can further improve the cycling performance and long-term use performance of the battery with a high group margin.

In some embodiments of this application, the secondary battery has an electrolyte injection coefficient of 2.5 g/Ah to 3.0 g/Ah, optionally 2.62 g/Ah to 2.90 g/Ah, and more optionally 2.70 g/Ah to 2.90 g/Ah. Controlling the electrolyte injection coefficient within the given range can ensure the safety of the battery, and facilitate full infiltration of the electrode plates, ensuring performance of the battery.

In some embodiments of this application, a surface of the first positive electrode active material is provided with a first coating layer, and optionally, the first coating layer includes one or more elements of Ti, Al, B, Nb, Zr, Si, and W. Providing the first coating layer can reduce side reactions between the first positive electrode active material and the electrolyte, and improve the structural stability of the positive electrode active material, thereby enhancing cycling performance and safety.

In some embodiments of this application, a thickness of the first coating layer is 20 nm to 150 nm.

In some embodiments of this application, a surface of the second positive electrode active material is provided with a second coating layer, and optionally, the second coating layer includes at least one of pyrophosphate, phosphate, and carbon. Providing the second coating layer can not only reduce side reactions between the second positive electrode active material and the electrolyte, but also avoid or inhibit dissolution of transition metals or doping elements, and enhance the structural stability thereof, thereby improving cycling performance and safety.

In some embodiments of this application, a thickness of the second coating layer is 10 nm to 50 nm.

In some embodiments of this application, a $D_v50$ particle size of the first positive electrode active material is 2.1 $\mu$m to 6.3 $\mu$m, optionally 3.5 $\mu$m to 4.9 $\mu$m; and/or a $D_v50$ particle size of the second positive electrode active material is 0.25 $\mu$m to 1.49 $\mu$m, optionally 0.5 $\mu$m to 0.9 $\mu$m.

In some embodiments of this application, in the second positive electrode active material, E includes one or more elements of B, Si, N, and S. Selecting the phosphorus site doping element E from the given range can further help change the difficulty degree of changing the Mn-O bond length, promote lithium ion migration, and improve the rate performance of the secondary battery.

In some embodiments of this application, in the second positive electrode active material, A' includes one or more elements of Fe, Ti, V, and Mg. Selecting the manganese site doping element A' from the given range can further improve the structural stability, gram capacity, cycling performance, rate performance, and the like of the secondary battery.

In some embodiments of this application, the second positive electrode active material includes a positive electrode active material that satisfies at least one of the following conditions: (i) y=1, and n=0, where the second positive electrode active material is $Li_{1+x}A'P_{1-z}E_zO_4$, where A' is element Fe, or A' is element Fe and one or more elements selected from Zn, Al, Na, K, Mg, Mo, W, Ti, V, Zr, Fe, Ga, Sn, Sb, Nb, and Ge; and (ii) $0.001 \leq y \leq 0.500$, and n=0, where the second positive electrode active material is $Li_{1+x}Mn_{1-y}A'_yP_{1-z}E_zO_4$.

In some embodiments of this application, the first positive electrode active material and the second positive

$$0.02 \leq \frac{n_{(A')}}{n_{(Ni)}} \leq 1.4 \qquad 0.15 \leq \frac{n_{(A')}}{n_{(P)}} \leq 1.50$$

electrode active material satisfy                          and                          , where $n_{(Ni)}$ is a molar amount of Ni in the positive electrode plate, measured in mol; $n_{(A')}$ is a molar amount of A' in the positive electrode plate, measured in mol;

and $n_{(P)}$ is a molar amount of P in the positive electrode plate, measured in mol. Controlling $\dfrac{n_{(A')}}{n_{(Ni)}}$ and $\dfrac{n_{(A')}}{n_{(P)}}$ within the given range can ensure that the first positive electrode active material and the second positive electrode active material have an appropriate mixing ratio, and that the second positive electrode active material has an appropriate manganese site doping percentage and good cycling performance, thereby further balancing the high energy density and good cycling performance of the secondary battery.

$$0.4 \leq \frac{n_{(A')}}{n_{(P)}} \leq 1.1$$

In some embodiments of this application,                          .

$$0.03 \leq \frac{n_{(A')}}{n_{(Ni)}} \leq 0.20$$

In some embodiments of this application,                          .

In some embodiments of this application, $0.001 \leq nsi) \leq 0.0026$, optionally $0.0014 \leq nsi) \leq 0.002$, and $0.00007 \leq n_{(A')} \leq 0.00075$, optionally $0.0001 \leq n_{(A')} \leq 0.00032$.

A second aspect of this application provides an electric apparatus including the secondary battery in the first aspect of this application.

## DESCRIPTION OF EMBODIMENTS

The following further describes this application with reference to specific embodiments. It should be understood that these specific embodiments are merely intended to illustrate this application but not to limit the scope of this application.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. A person skilled in the art can clearly and implicitly understand that the embodiments described in this application can be combined with other embodiments.

"Ranges" disclosed in this application are defined in the form of lower limit and/or upper limit. A given range is defined by one lower limit and/or one upper limit selected, where the selected lower limit and/or upper limit defines boundaries of that particular range. The range defined in this way may include or exclude end values, and any combination can be formed. That is, any lower limit may be combined with any upper limit to form an unspecified range, and any lower limit may be combined with another lower limit to form an unspecified range, and likewise, any upper limit may be combined with any other upper limit to form an unspecified range. In addition, each individually disclosed point or single numerical value, as a lower limit or an upper limit, may be combined with any other points or single numerical value or combined with another lower limit or upper limit to form an unspecified range. For example, if a range not greater than 150 is provided for a specific parameter, it is understood that ranges of 10 to 140, 20 to 120, and the like that are not greater than 150 can also be envisioned. In addition, if low limit values of a range are given as 2.1 and 3.5, and upper limit values of the range are given as 4.9 and 6.3, the following ranges can all be envisioned: 2.1 to 6.3, 2.1 to 4.9, 3.5 to 6.3, and 3.5 to 4.9. In this application, unless otherwise stated, a value range of " 10-50" is a short representation of any combination of real numbers between 10 and 50, where both 10 and 50 are real numbers. For example, a value range of "20-30" means that all real numbers in the range of "20-30" are listed herein, and "20-30" is just a short representation of a combination of these values.

Unless otherwise specified, all the embodiments and optional embodiments of this application can be combined with each other to form new technical solutions, and such technical solutions should be considered to be included in the disclosure of this application.

Unless otherwise specified, all the technical features and optional technical features of this application can be combined with each other to form new technical solutions, and such technical solutions should be considered to be included in the disclosure of this application.

Unless otherwise specified, all the steps in this application can be performed sequentially or randomly, preferably, performed sequentially. For example, a method including steps S1 and S2 indicates that the method may include steps S1 and S2 performed sequentially, or may include steps S2 and S1 performed sequentially. For example, that the method may further include step S3 indicates that step S3 may be added to the method in any sequence. For example, the method may include steps S1, S2, and S3, steps S1, S3, and S2, steps S3, S1, and S2.

Unless otherwise specified, "include" and "contain" mentioned in this application are inclusive or may be exclusive. For example, terms "include" and "contain" can mean that other unlisted components may also be included or contained, or only listed components may be included or contained. In this application, the term "a plurality of" means two or more than two and the term "a plurality of types" means two types or more than two types.

Unless otherwise specified, the term "and/or" in this application is only an associative relationship for describing associated objects, indicating that three relationships may be present. For example, A and/or B may indicate three cases: presence of only A; presence of both A and B; and presence of only B. In addition, the character "/" in this specification generally indicates an "or" relationship between contextually associated objects.

Unless otherwise defined, all technical and scientific terms used in this application shall have the same meanings as commonly understood by those skilled in the art to which this application relates. The terms used in this application are intended to merely describe the specific embodiments rather than to limit this application. The terms "include" and "have" and any other variations thereof in the specification and claims of this application are intended to cover non-exclusive inclusions. Unless otherwise specified, terms used in this application have common meanings generally understood by persons skilled in the art. Unless otherwise specified, numerical values of parameters mentioned in this application may be measured by using various measurement methods commonly used in the art (for example, testing may be performed by using a method provided in the embodiments of this application).

Currently, increasing the group margin of batteries is one of the common methods to improve the energy density of batteries. However, when a battery has a higher in-housing group margin, the space occupation proportion of a wound cell or laminated cell in the battery increases, that is, layer counts of anode and cathode plates in the wound cell/laminated cell increase, or the number of wound cells/laminated cells increases. As a result, the space available for swelling of positive and negative electrode plates inside the battery correspondingly decreases. Therefore, when a battery with a high group margin is charged, the wound cell is subjected to severe electrolyte leakage under a large squeezing force, leading to lithium precipitation and other issues. In addition, the $Li_aNi_bCo_cM_{1d}M_{2e}O_fR'_g$ positive electrode active material system has small lattice shrinkage during charge. When the group margin of the battery is high, electrode plate swelling at the negative electrode during charge cannot be matched, and severe electrolyte leakage is also likely to occur during charge, resulting in issues such as lithium precipitation that worsen performance of the battery. Lithium precipitation not only reduces performance of the battery and significantly shortens the cycle life, but also limits the capacity of the battery. More seriously, it can cause internal short circuits and potentially lead to catastrophic consequences such as catching fire and explosion, thus creating safety problems.

In view of this, a first aspect of this application provides a secondary battery, including a battery housing and a positive electrode plate, a negative electrode plate, a separator, and an electrolyte that are disposed within the battery housing. The separator is arranged between the positive electrode plate and the negative electrode plate. The positive electrode plate includes a positive electrode active material layer, and the positive electrode active material layer includes a first positive electrode active material and a second positive electrode active material. The first positive electrode active material includes $Li_aNi_bCo_cM_{1d}M_{2e}O_fR'_g$, where $0.75 \leq a \leq 1.2$, $0 < b < 1$, $0 < c < 1$, $0 < d < 1$, $0 \leq e \leq 0.2$, $1 \leq f \leq 2.5$, $0 \leq g \leq 1$, $f+g \leq 3$, $M_1$ is element Mn and/or element Al, $M_2$ includes one or more elements of Zr, Zn, Cu, Cr, Mg, Fe, V, Ti, Sr, Sb, Y, W, and Nb, and R' includes one or more elements of N, F, S, and Cl. The second positive electrode active material includes $Li_{1+x}M_{3n}Mn_{1-y}A'_yP_{1-z}E_zO_4$, where $-0.100 \leq x \leq 0.100$, $0 \leq n \leq 1.1$, $0.00 \leq y \leq 1$, $0 \leq z \leq 0.100$, $M_3$ includes one or more elements of Zn, Al, Na, K, Mg, Nb, Mo, and W, A' includes one or more elements of Zn, Al, Na, K, Mg, Mo, W, Ti, V, Zr, Fe, Ga, Sn, Sb, Nb, and Ge, and E includes one or more elements of B, Si, N, S, F, Cl, and Br. The secondary battery satisfies:

$$0.9 \leq \frac{d_{positive} \times N_1 + d_{negative} \times N_2 + d_{separator} \times N_3}{d_{housing}} \leq 0.95$$

where $d_{positive}$ represents a thickness of a single layer of positive electrode plate, measured in mm; $d_{negative}$ represents a thickness of a single layer of negative electrode plate, measured in mm; $d_{separator}$ represents a thickness of a single layer of separator, measured in mm; $d_{housing}$ represents an inner cavity thickness of the battery housing, measured in mm; $N_1$ represents a layer count of the positive electrode plate within the battery housing; $N_2$ represents a layer count of the negative electrode plate within the battery housing; and $N_3$ represents a layer count of the separator within the battery housing.

The inventors have found that mixing the $Li_aNi_bCo_cM_{1d}M_{2e}O_fR'_g$ positive electrode active material system with the positive electrode active material $Li_{1+x}M_{3n}Mn_{1-y}A'_yP_{1-z}E_zO_4$ that has large lattice shrinkage during charge can effectively improve lattice shrinkage of the positive electrode, matching swelling at the negative electrode, thereby avoiding performance deterioration of the battery and even safety problems in a case of high group margin as much as possible. However, the following problems still exist. When the battery is charged, lithium intercalation speeds and accumulation state within the active material layer at different regions of the negative electrode plate are different, leading to different stresses in different regions of the negative electrode plate during charge, eventually causing the electrode plate to wrinkle (wrinkling affects the long-term performance of the battery). Generally, a wound cell or laminated cell is pressed against an outer shell during charge to flatten the negative electrode. However, when the group margin of the battery is too low, mixing $Li_aNi_bCo_cM_{1d}M_{2e}O_fR'_g$ with $Li_{1+x}M_{3n}Mn_{1-y}A'_yP_{1-z}E_zO_4$ to improve lattice shrinkage of the positive electrode, it is likely that the wound cell or laminated cell fails to come into contact with the outer shell wall during charge, that is, the wound cell or laminated cell cannot receive external pressure to flatten itself, leading to wrinkling of the negative electrode. When the group margin of the battery is too high, although mixing $Li_aNi_bCo_cM_{1d}M_{2e}O_fR'_g$ with $Li_{1+x}M_{3n}Mn_{1-y}A'_yP_{1-z}E_zO_4$ can improve lattice shrinkage and reduce a squeezing force on the wound cell during charge, with the increase of battery usage time, it is inevitable that side reactions take place on the surface of the negative electrode. The side reactions increase the thickness of the negative electrode plate, leading to further growth of the group margin of the battery, which exceeds the improvement capacity of $Li_{l1+x}M_{3n}Mn_{1-y}A'_yP_{1-z}E_zO_4$ mixed, ultimately worsening the performance of the battery. Therefore, it is necessary to control an appropriate group margin to ensure flatness of the negative electrode and long-term performance of the battery. The inventors have found during exploration that controlling the group margin of batteries to satisfy the range (0.9 to 0.95) defined by the above formula, and mixing $Li_aNi_bCo_cM_{1d}M_{2e}O_fR'_g$ with $Li_{1+x}M_{3n}Mn_{1-y}A'_yP_{1-z}E_zO_4$ to improve lattice shrinkage of the positive electrode not only are beneficial to flatness of the negative electrode, but also can effectively match swelling of the negative electrode. Therefore, this avoids performance degradation or safety problems of the battery as much as possible in a case of high group margin. That is, it is possible to obtain a high group margin while flatness of the negative electrode and long-term performance of the battery are achieved. In addition, the positive electrode active material $Li_aNi_bCo_cM_{1d}M_{2e}O_fR'_g$ helps to improve the energy density of the battery, and mixing it with the positive electrode active material $Li_{1+x}M_{3n}Mn_{1-y}A'_yP_{1-z}E_zO_4$ helps to improve the cycling performance. Flexibly adjusting the relative amount of the two can further balance high energy density and good cycling performance of the battery with a high group margin. In summary, the secondary battery not only helps to meet flatness of the negative electrode and long-term performance of the battery but also can further balance the high energy density and good cycling performance of the battery with a high group margin, thereby improving the service life and safety of the secondary battery.

Furthermore, through in-depth research, the inventors have also found that on the basis of the secondary battery of this application meeting the above conditions, the performance of the secondary battery can be further improved by further controlling the selection of the positive electrode active materials, the thickness of the electrode plates and separator, the lattice shrinkage rate of the positive electrode active materials, the compacted density of the active material layer of the electrode plate, the electrolyte injection coefficient, and the like. That is, on the basis of meeting the above conditions, one or more of the following conditions can be optionally met.

In some embodiments of this application, the first positive electrode active material can be partially $Li_aNi_bCo_cM_{1d}M_{2e}O_fR'_g$ or can be completely $Li_aNi_bCo_cM_{1d}M_{2e}O_fR'_g$, where $0.75 \leq a \leq 1.2$, $0<b<1$, $0<c<1$, $0<d<1$, $0 \leq e \leq 0.2$, $1 \leq f \leq 2.5$, $0 \leq g \leq 1$, $f+g \leq 3$, $M_1$ is element Mn and/or element Al, $M_2$ includes one or more elements of Zr, Zn, Cu, Cr, Mg, Fe, V, Ti, Sr, Sb, Y, W, and Nb, and R' includes one or more elements of N, F, S, and Cl. Optionally, $0.5 \leq b<1$, $0<c \leq 0.5$, and $0<d \leq 0.5$. Making the positive electrode active material $Li_aNi_bCo_cM_{1d}M_{2e}O_fR'_s$ meet the above given range conditions is more conducive to ensuring that the secondary battery has high energy density, good cycling performance, and long cycle life. In the positive electrode active material $Li_aNi_bCo_cM_{1d}M_{2e}O_fR'_g$, a nickel-cobalt-manganese ternary positive electrode active material (that is, NCM) system is used as an example. Increasing the nickel percentage can improve the volumetric energy density of the positive electrode material. Increasing the manganese percentage can reduce material costs, and improve material safety and structural stability, but a too high manganese percentage destroys the layered structure of the material, reducing the specific capacity of the material. Cobalt can stabilize the layered structure of the material and improve the cycling and rate performance of the material, but a too high cobalt percentage leads to a reduced actual capacity. Ensuring that the nickel, cobalt, and manganese percentages meet the above given range conditions can offer the secondary battery with high energy density, good rate performance, and cycling performance. Optionally, $M_1$ can be element Mn. The first positive electrode active material can be a positive electrode active material of the NCM system. In this case, its general formula can be $Li_aNi_eCo_cMn_aM_{2e}O_fR'_g$, such as a nickel-cobalt-manganese ternary layered positive electrode active material.

In some embodiments of this application, the second positive electrode active material can be partially $Li_{1+x}M_{3n}Mn_{1-y}A'_yP_{1-z}E_zO_4$ or completely $Li_{1+x}M_{3n}Mn_{1-y}A'_yP_{1-z}E_zO_4$, where $-0.100 \le x \le 0.100$, $0 \le n \le 1.1$, $0.001 \le y \le 1$, $0 \le z \le 0.100$, $M_3$ includes one or more elements of Zn, Al, Na, K, Mg, Nb, Mo, and W, A' includes one or more elements of Zn, Al, Na, K, Mg, Mo, W, Ti, V, Zr, Fe, Ga, Sn, Sb, Nb, and Ge, and E includes one or more elements of B, Si, N, S, F, Cl, and Br. Performing doping at least one of the lithium site, manganese site, and phosphorus site can help improve the performance of the positive electrode active material, such as improving interface performance, reducing interfacial side reactions with the electrolyte, lowering the anti-site defect concentration, enhancing kinetic performance and gram capacity of the material, and the like. In addition, adjusting the doping element at the manganese site can also improve the particle morphology and increase the compacted density. Specifically, although a higher lattice shrinkage rate is more conducive to matching volume swelling at the negative electrode during charge, a too high lattice shrinkage rate of the positive electrode material is not conducive to lithium ion transport. Element A' doped at the manganese site being selected from the above elements helps to appropriately reduce the lattice change rate of the material during lithium intercalation and deintercalation, improve the structural stability of the positive electrode material, reduce dissolution of a manganese site element, and decrease the oxygen activity on the particle surface, thereby increasing the gram capacity of the material, reducing the interfacial side reactions of the material with electrolyte during use, enhancing the cycling performance of the material, and the like. Element E doped at the phosphorus site being selected from the above elements can further help to change the difficulty degree of changing the Mn-O bond length, thereby improving electronic conductivity and reducing the lithium ion migration barrier, promoting lithium ion migration, and enhancing the rate performance of the secondary battery. Similarly, element $M_3$ doped at the lithium site being selected from the above elements also helps to improve the lattice change rate of the material and maintain the capacity of the material. If the value of x is too small, the percentage of lithium of the entire core system decreases, which affects the gram capacity extraction of the material. The value of y limits the total amount of all doping elements, affecting the manganese amount in the system and the voltage platform of the material. Element E is doped at the phosphorus site. Because the P-O tetrahedron is relatively stable, a too large value of z affects the stability of the material. When x, y, and z are selected from the above ranges, the positive electrode active material can have better performance. Moreover, the selection of the above doping elements and the values of x, n, y, and z can also allow $Li_{1+x}M_{3n}Mn_{1-y}A'_yP_{1-z}E_zO_4$ to maintain electrical neutrality. Maintaining electrical neutrality can ensure that defects and impurity phases in the positive electrode active material are minimized. A positive electrode active material of the lithium manganese phosphate system is used as an example. If there is an excessive amount of transition metal (for example, manganese), due to the inherent stability of the material system, the excessive transition metal is likely to precipitate in elemental form or form impurity phases within a lattice. Maintaining electrical neutrality minimizes such impurity phases. Furthermore, maintaining electrical neutrality of the system can, in some cases, create lithium vacancies in the positive electrode active material, thereby allowing for better kinetic performance of the positive electrode active material. As compared with existing materials such as lithium manganese phosphate, lithium iron phosphate, and lithium manganese iron phosphate that can be applied to high voltage systems, this is more conducive to achieving better cycling performance and high-temperature stability, as well as larger gram capacity and higher compacted density. It can be understood that in the "manganese site" doping described in this application, the manganese site merely represents the position of element manganese or element A' in the lattice of the positive electrode active material $Li_{1+x}M_{3n}Mn_{1-y}A'_yP_{1-z}E_zO_4$, and does not necessarily mean that the manganese site contains element manganese. Element manganese at the manganese site can be partly or entirely replaced by element A'. For example, when the value of y is 1, the second positive electrode active material $Li_{1+x}M_{3n}Mn_{1-y}A'_yP_{1-z}E_zO_4$ does not contain element manganese. For instance, in this case, the manganese site may include element iron or include both element iron element and another doping element.

In some embodiments of this application, in the second positive electrode active material $Li_{1+x}M_{3n}Mn_{1-y}A'_yP_{1-z}E_zO_4$, E may include one or more elements of B, Si, N, and S. Selecting element E for phosphorus site doping from the given range can further help change the difficulty degree of changing the Mn-O bond length, thereby improving electronic conductivity and reducing the lithium ion migration barrier, promoting lithium ion migration, and enhancing the rate performance of the secondary battery.

In some embodiments of this application, in the second positive electrode active material $Li_{1+x}M_{3n}Mn_{1-y}A'_yP_{1-}$

$_zE_zO_4$, A' may include one or more elements of Fe, Ti, V, and Mg. Optionally, A' can be element Fe; more optionally, A' can be at least two elements selected from Fe, Ti, V, and Mg; and further optionally, A' can be element Fe and one or more elements selected from Ti, V, and Mg. Selecting element A' for manganese site doping from the given range can further improve the structural stability, gram capacity, cycling performance, rate performance, and the like of the secondary battery.

In some embodiments of this application, in the second positive electrode active material $Li_{1+x}M_{3n}Mn_{1-y}A'_yP_{1-z}E_zO_4$, doping can be performed at both the manganese site and phosphorus site. This can not only effectively reduce dissolution of a manganese site element, thereby reducing manganese site ions migrating to the negative electrode, reducing the electrolyte consumed by SEI film breakdown, and improving the cycling performance and safety performance of the secondary battery. This can also promote Mn-O bond adjustment, reduce the lithium ion migration barrier, promote lithium ion migration, and improve the rate performance of the secondary battery. More optionally, doping can also be performed at the lithium site, manganese site, and phosphorus site, further achieving significantly improved rate performance, improved cycling performance, and/or high-temperature stability.

In some embodiments of this application, the second positive electrode active material may include one or more of all positive electrode active materials that conform to the above general formula $Li_{1+x}M_{3n}Mn_{1-y}A'_yP_{1-z}E_zO_4$, such as lithium manganese phosphate system, lithium iron phosphate system, and lithium manganese iron phosphate system. For example, the second positive electrode active material may include a positive electrode active material that satisfies at least one of the following three conditions. (i) y=1, and n=0. In this case, the second positive electrode active material is $Li_{1+x}A'P_{1-z}E_zO_4$, A' can be element Fe, or A' can be element Fe and include one or more elements of Zn, Al, Na, K, Mg, Mo, W, Ti, V, Zr, Fe, Ga, Sn, Sb, Nb, and Ge. That is, the second positive electrode active material may include lithium iron phosphate or doped lithium iron phosphate in which doping is performed on at least one of the iron site (same position as the manganese site) and the phosphorus site. (ii) 0.001≤y≤0.500, and n=0. In this case, the second positive electrode active material is $Li_{1+x}Mn_{1-y}A'_yP_{1-z}E_zO_4$, that is, lithium manganese phosphate or doped lithium manganese phosphate in which doping is performed on at least one of the lithium site, manganese site, and phosphorus site. In this application, modification of lithium manganese phosphate can achieve significantly reduced dissolution of a manganese site element and reduced lattice change rate, making it more advantageous for use in secondary batteries to improve cycling performance, rate performance, safety performance, and capacity of batteries. For example, doping the compound $LiMnPO_4$ with a specific amount of a specific element at the lithium site, manganese site, and phosphorus site can offer improved rate performance, reduce dissolution of Mn and Mn site doping elements, and offer improved cycling performance and/or high-temperature stability. In addition, this increases the gram capacity and compacted density of the positive electrode active material. In a specific example, $Li_{1+x}Mn_{1-y}A'_yP_{1-z}E_zO_4$ may include $Li_{1+x}Mn_{1-y}Fe_yP_{1-z}E_zO_4$. As compared with lithium iron phosphate, lithium manganese iron phosphate has a higher voltage platform, and higher energy density under a same specific capacity. (iii) 0.001≤y≤0.500, and 0.9≤n≤1.1, where the second positive electrode active material is $Li_{1+x}M_{3n}Mn_{1-y}A'_yP_{1-z}E_zO_4$. For the second positive electrode active material of the lithium manganese phosphate system, considering the value of y limits the total amount of all doping elements, if y is too small, that is, the doping amount is too small, the doping element cannot play its function. If y exceeds 0.5, it results in a lower Mn percentage in the system, affecting the voltage platform of the material. Therefore, the value range of y can optionally be 0.001 to 0.500, more optionally 0.25 to 0.5. It should be noted that in the chemical formulas $Li_{1+x}A'P_{1-z}E_zO_4$, $Li_{1+x}Mn_{1-y}A'_yP_{1-z}E_zO_4$ and $Li_{1+x}M_{3n}Mn_{1-y}A'_yP_{1-z}E_zO_4$ used in the above three conditions, the stoichiometric numbers of elements located at the same location can be the same or different, but all fall within the ranges defined for the stoichiometric numbers of the elements in the chemical formula $Li_{1+x}M_{3n}Mn_{1-y}A'_yP_{1-z}E_zO_4$.

In a specific example, the second positive electrode active material may include a positive electrode active material that satisfies at least one of the following two conditions: (i) y=1, and n=0, where the second positive electrode active material is $Li_{1+x}A'P_{1-z}E_zO_4$, where A' is element Fe, or A' is element Fe and one or more elements selected from Zn, Al, Na, K, Mg, Mo, W, Ti, V, Zr, Fe, Ga, Sn, Sb, Nb, and Ge; and (ii) 0.001≤y≤0.500, and n=0, where the second positive electrode active material is $Li_{1+x}Mn_{1-y}A'_yP_{1-z}E_zO_4$. Optionally, the second positive electrode active material may include only the positive electrode active material with the chemical formula $Li_{1+x}A'P_{1-z}E_zO_4$ and/or the chemical formula $Li_{1+x}Mn_{1-y}A'_yP_{1-z}E_zO_4$. The values of x and z in the two chemical formulas are independent, but both meet the value ranges defined for the stoichiometric numbers of x and z in the chemical formula $Li_{1+x}M_{3n}Mn_{1-y}A'_yP_{1-z}E_zO_4$.

In this application, for the chemical formula $Li_aNi_bCo_cM_{1d}M_{2e}O_fR'_g$ of the first positive electrode active material and the chemical formula $Li_{1+x}M_{3n}Mn_{1-y}A'_yP_{1-z}E_zO_4$ of the second positive electrode active material, unless otherwise specified, when a doping site has more than two elements, limitation on the value range of the stoichiometric number of an element at the corresponding doping site in the chemical formula is not only limitation for the stoichiometric number of each element at that site but also limitation for the sum of the stoichiometric numbers of all elements at that site. For example, the chemical formula of the second positive electrode active material $Li_{1+x}M_{3n}Mn_{1-y}A'_yP_{1-z}E_zO_4$ is used as an example. When $A_1'$ is more than two elements: $A_1'$, $A_2'$... $A_n'$, the stoichiometric numbers $y_1$, $y_2$ ... $y_n$ of $A_1'$, $A_2'$... $A_n'$ all must fall within the value range defined for y in this application, and the sum of $y_1$, $y_2$... $y_n$ must also fall within the value range. Similarly, in a case that $M_3$ or E is more than two elements, the limitation on the value ranges of the stoichiometric number of $M_3$ and E in

this application also has the foregoing meaning.

In some embodiments of this application, $0.91 \leq \frac{d_{\text{positive}} \times N_1 + d_{negaive} \times N_2 + d_{separator} \times N_3}{d_{housing}} \leq 0.94$ is further satisfied. That is, the value of the group margin of the secondary battery can be 0.91 to 0.94, for example, 0.915, 0.92, 0.925, 0.93, 0.935, or in a range defined by any two of the above values. For the secondary battery of this application, considering that a too low group margin of the battery is not conducive to contact between the wound cell or laminated cell of the battery and the outer shell of the battery, and thus cannot be flattened by an external squeezing force, causing the negative electrode to wrinkle, and when the group margin is too high, as the battery usage time increases, side reactions inevitably occur on the surface of the negative electrode. These side reactions increase the thickness of the negative electrode plate, leading to a further increase in the group margin of the battery, which exceeds the improvement capability of $Li_{1+x}M_{3n}Mn_{1-y}A'_yP_{1-z}E_zO_4$ mixed, ultimately worsening performance of the battery. Therefore, the group margin range of the battery can be further controlled within 0.91 to 0.94, thereby further ensuring flatness of the negative electrode and long-term performance of the secondary battery, and helping to further balance the energy density and good cycling performance of the secondary battery. The group margin can be controlled by controlling the thicknesses and layer counts of the positive electrode plate, negative electrode plate, and separator within the battery housing, as well as the inner cavity thickness of the battery housing.

In some embodiments of this application, in the secondary battery, the thickness $d_{positive}$ of a single layer of positive electrode plate meets the following condition: 0.11 mm≤$d_{positive}$≤0.16 mm. For example, $d_{positive}$ can be 0.115 mm, 0.12 mm, 0.125 mm, 0.13 mm, 0.135 mm, 0.14 mm, 0.145 mm, 0.15 mm, 0.155 mm, or in a range defined by any two of the above values. In addition, the thickness $d_{negative}$ of a single layer of negative electrode plate meets the following condition: 0.15 mm≤$d_{negative}$≤0.20 mm. For example, $d_{negative}$ can be 0.155 mm, 0.16 mm, 0.165 mm, 0.17 mm, 0.175 mm, 0.18 mm, 0.185 mm, 0.19 mm, 0.195 mm, or in a range defined by any two of the above values. A too small thickness of the positive electrode plate/negative electrode plate represents a too thin active material coating layer on the electrode plate or too high compacted density. The former affects the energy density, while the latter affects the infiltration of the electrolyte into the electrode plate, worsening the cycling performance. A too large thickness represents a too thick active material coating layer or too low compacted density. The former increases polarization of the electrode plate, worsening performance of the battery, while the latter increases the contact resistance between particles within the electrode plate, worsening performance of the battery. In this application, controlling the thickness of a single layer of positive electrode plate and the thickness of a single layer of negative electrode plate within the above given ranges respectively can balance the high capacity, cycling performance, and rate performance of the secondary battery, which is conducive to improving the discharge current and fast charge performance of the battery. Optionally, 0.12 mm≤$d_{positive}$≤0.14 mm, more optionally, 0.16 mm≤$d_{negative}$≤0.18 mm. Controlling the thickness of a single layer of positive electrode plate and the thickness of a single layer of negative electrode plate within the given ranges respectively can further balance the high capacity, cycling performance, rate performance, and the like of the secondary battery. It should be noted that the measurement methods of the thickness of the positive electrode plate and the thickness of the negative electrode plate are not specifically limited. Those skilled in the art can flexibly make a choice according to actual needs. Specifically, conventional test methods in the art can be used, such as using a lithium battery electrode plate thickness measuring instrument to measure the thickness of the electrode plate of the secondary battery.

In some embodiments of this application, in the secondary battery, the thickness $d_{separator}$ of a single layer of separator meets the following condition: 0.009 mm≤$d_{separator}$≤0.014 mm. For example, $d_{separator}$ can be 0.01 mm, 0.011 mm, 0.012 mm, 0.013 mm, or in a range defined by any two of the above values. A too large separator thickness increases polarization of the battery, making electrolyte infiltration difficult, and worsening energy density of the battery, while a too small separator thickness affects safety performance of the battery. Controlling the thickness of a single layer of separator within the given range in this application can not only effectively ensure insulation between the positive and negative electrode plates, preventing short circuits caused by contact between the positive and negative electrodes, but also enable the separator to have certain tensile, tear, and puncture resistance capabilities, preventing short circuits caused when the separator is prone to be pierced by burrs, particles, and dendrites. In addition, controlling the thickness of a single layer of separator within the given range can also prevent the separator thickness from being too large, which affects the energy density of the battery. Optionally, 0.0011 mm≤$d_{separator}$≤0.012 mm. In addition to effectively preventing short circuits caused by contact between the positive and negative electrodes and short circuits caused when the separator is prone to be pierced by burrs, particles, and dendrites, this further reduces the negative impact of the separator on the energy density of the secondary battery. The test for the separator thickness can also be performed by using conventional methods in the art, for example, by referring to GB/T 6672-2001.

In some embodiments of this application, when the positive electrode plate is in a fully delithiated state, the positive electrode active materials have an average lattice volume shrinkage rate of not less than 2.7%, for example, 2.8%, 3%, 3.2%, 3.5%, 4.0%, 2.7% to 7%, or in a range defined by any two of the above values. The lattice volume shrinkage is related to the lithiation state of the positive electrode material, that is, the delithiated state of the positive electrode material (the positive electrode material is initially in a fully lithiated state, and as the charge process proceeds, lithium is removed from the positive electrode material, and reaches and then intercalates the negative electrode). As charge proceeds, the lithium percentage in the positive electrode material decreases, accompanied by lattice volume shrinkage (after delithiation, the valence states of some elements participating in the electrochemical reaction in the positive electrode material correspondingly increases, and in this case, the ionic radius decreases, that is, lattice volume shrinkage on a macro scale). The extent of lattice volume shrinkage varies under different delithiated states. In this application, the fully delithiated state is used as an example (that is, from the fully lithiated state to the fully delithiated state), the lattice volume shrinkage rate of the first positive electrode active material $Li_aNi_bCo_cM_{1d}M_{2e}O_fR'_g$ is generally not greater than 2.7%, while the $Li_{1+x}M_{3n}Mn_{1-y}A'_yP_{1-z}E_zO_4$ for mixing has a higher lattice volume shrinkage rate in the fully delithiated state. Mixing the first positive electrode active material and the second positive electrode active material and controlling the lattice volume shrinkage rate of the mixed positive electrode active material in the fully delithiated state within the given range can further match the electrode plate swelling of the negative electrode during charge, thereby avoiding the deterioration of performance of the battery and even safety problems in a case of high group margin as much as possible. This is beneficial to meeting the long-term performance of the battery. It should be noted that in this application, the average lattice volume shrinkage rate of the positive electrode active material refers to the lattice volume shrinkage rate of the composite positive electrode active material obtained by mixing the first positive electrode active material and the second positive electrode active material in the fully delithiated state. Given that the lattice volume shrinkage rates of the first positive electrode active material and the second positive electrode active material in the fully delithiated state are different, the average lattice volume shrinkage rate is used herein to refer to the lattice shrinkage rate of the composite positive electrode active material obtained from mixing in the fully delithiated state.

In some embodiments of this application, when the positive electrode plate is in the fully delithiated state, the second positive electrode active material can have a lattice volume shrinkage rate of 2.7% to 6.9%, for example, 2.9%, 3.3%, 3.6%, 4.1%, 4.5%, 4.8%, 5.2%, 5.6%, 6.0%, 6.4%, 6.8%, or in a range defined by any two of the above values. Although a higher lattice shrinkage rate is more conducive to matching the volume swelling of the negative electrode during charge, a too high lattice shrinkage rate of the positive electrode material is not conducive to lithium ion transport. Further controlling the lattice volume shrinkage rate of the second positive electrode active material in the fully delithiated state within the given range can allow the positive electrode active material obtained by mixing the second positive electrode material with the first positive electrode material to have a more suitable volume shrinkage rate. Therefore, the volume swelling of the negative electrode during charge can be better matched, lithium ion transport can be promoted, offering a higher lithium ion migration capability, and further balancing the cycling performance and rate performance of the secondary battery. Furthermore, when the positive electrode plate is in the fully delithiated state, the positive electrode active materials have an average lattice volume shrinkage rate of 2.7% to 4.2%. That is, the average lattice volume shrinkage rate of the positive electrode active materials obtained by mixing the first positive electrode material and the second positive electrode material in the fully delithiated state can be 2.7% to 4.2%. Therefore, the volume swelling of the negative electrode during charge can be better matched, and a higher lithium ion migration capability can be further ensured, which is more conducive to improving the cycling performance and rate performance of the secondary battery.

In this application, the lattice volume shrinkage rate of the positive electrode active material can be measured by methods known in the art, such as using an X-ray diffraction (XRD) pattern and other methods. In a specific example, XRD test can be performed on the positive electrode active material in different delithiated states (points can be selected based on a charge curve of a button cell made of the positive electrode material, and it is recommended to select one point every 5% SOC, where SOC=capacity at a certain voltage/total charge capacity). The XRD test conditions are 12 degrees to 40 degrees, with a scan speed of 0.02 degrees/min. The test data is processed using Jade software to obtain lattice parameters a/b/c/$\beta$ of the positive electrode material in that state. The lattice volume in that state is calculated according to the formula V=abc$\times$sin$\beta$, and so on. Lattice volumes of the positive electrode material at different delithiated states are obtained so as to calculate the lattice volume shrinkage rate. Lattice volume shrinkage rate in fully delithiated state=(lattice volume (fully delithiated state) - lattice volume (fully lithiated state))/lattice volume (fully lithiated state)$\times$ 100%. The method of obtaining the positive electrode active material at different delithiated states can be as follows: The positive electrode active material is made into a button cell, the button cell is charged to a selected voltage according to the described method, the button cell is disassembled in a glove box, and the positive electrode plate is taken out for soaking in DMC solution for 6 h. The electrode plate is rinsed with the DMC solution for 2 to 3 times, and then dried.

In some embodiments of this application, the active material layer of the positive electrode plate can have a compacted density of 3.10 g/cm³ to 3.50 g/cm³, for example, 3.15 g/cm³, 3.20 g/cm³, 3.25 g/cm³, 3.30 g/cm³, 3.35 g/cm³, 3.40 g/cm³, 3.45 g/cm³, or in a range defined by any two of the above values. The compacted density of the active material layer of the positive electrode plate can be measured according to GB/T 24533-2009. A too low compacted density of the positive electrode active material layer of the positive electrode plate is prone to lead to loose contact between particles inside the electrode plate and increase contact resistance. In addition, the positive electrode plate having the positive electrode active material layer with a too low compacted density has a larger thickness, which is difficult to meet the high group margin design requirement. A too high compacted density of the positive electrode active material layer of the positive electrode plate leads to two problems. First, it is likely to cause partial particle breakage/cracking inside the electrode plate after cold pressing. The broken particles/cracks are prone to side reactions with the electrolyte, causing performance deterioration of the battery. During cycling of the battery, the large internal pressure of the electrode plate makes particles press against each other, easily leading to particle breakage. Second, the porosity of the electrode plate decreases, making electrolyte infiltration more difficult, thereby likely causing performance deterioration of the battery. In this application, controlling the compacted density of the active material layer of the positive electrode plate within the given range is more conducive to alleviating polarization of the electrode plate, and enhancing the cycling performance and long-term use performance of the battery with a high group margin. Optionally, the compacted density of the active material layer of the positive electrode plate can be 3.15 $g/cm^3$ to 3.40 $g/cm^3$, more optionally 3.15 $g/cm^3$ to 3.35 $g/cm^3$, thereby further improving the cycling performance and long-term use performance of the battery with a high group margin.

In some embodiments of this application, the active material layer of the negative electrode plate can have a compacted density of 1.6 $g/cm^3$ to 1.70 $g/cm^3$, for example, 1.62 $g/cm^3$, 1.64 $g/cm^3$, 1.66 $g/cm^3$, 1.68 $g/cm^3$, or in a range defined by any two of the above values. The compacted density of the active material layer of the negative electrode plate can be measured according to GB/T 24533-2009. A too low compacted density of the negative electrode active material layer of the negative electrode plate also causes loose contact between particles inside the electrode plate and increases contact resistance, and is not conducive to meeting the design requirement of high group margin. A too high compacted density of the negative electrode active material layer is also prone to causing performance deterioration of the battery. In this application, controlling the compacted density of the active material layer of the negative electrode plate within the given range is not only conducive to improving the performance of the negative electrode, but also more conducive to matching the lattice volume shrinkage rate of the positive electrode active material with the volume swelling of the negative electrode during charge, further improving the cycling performance and long-term use performance of the battery with a high group margin. Optionally, the compacted density of the active material layer of the negative electrode plate can be 1.64 $g/cm^3$ to 1.69 $g/cm^3$, thereby further improving the cycling performance and long-term use performance of the battery with a high group margin.

In some embodiments of this application, the electrolyte injection coefficient of the secondary battery can be 2.5 g/Ah to 3.0 g/Ah, for example, it can be 2.6 g/Ah, 2.65 g/Ah, 2.7 g/Ah, 2.75 g/Ah, 2.8 g/Ah, 2.85 g/Ah, 2.9 g/Ah, 2.95 g/Ah, or in a range defined by any two of the above values. The inventors found that when the secondary battery has a high group margin and a high compacted density of the positive electrode plate, the corresponding electrolyte infiltration difficulty is also high. If the electrolyte injection coefficient is too low, resulting in a small amount of electrolyte, it is difficult to meet the infiltration needs of the electrode plates, easily leading to rapid performance of the battery degradation. If the electrolyte injection coefficient is too high, the internal free space of the battery is further reduced. As the battery generates gas during use, the reduction in internal free space leads to an increase in internal pressure of the battery, affecting safety of the battery. Controlling the electrolyte injection coefficient within the given range in this application can not only ensure the safety of the battery but also facilitate the full infiltration of the electrode plates, thereby ensuring performance of the battery. Optionally, the electrolyte injection coefficient of the secondary battery can be 2.62 g/Ah to 2.90 g/Ah, more optionally 2.70 g/Ah to 2.90 g/Ah, thereby further balancing safety of the battery and performance of the battery.

In some embodiments of this application, a surface of the first positive electrode active material can be provided with a first coating layer, and optionally, the first coating layer may include one or more elements of Ti, Al, B, Nb, Zr, Si, and W. Disposing a coating layer on the surface of the positive electrode active material can not only avoid contact between the positive electrode active material and the electrolyte, thereby reducing side reactions between the positive electrode active material and the electrolyte, but also improve the structural stability of the positive electrode active material, thereby enhancing the cycle stability performance and safety of the material. In addition, the foregoing elements in the first coating layer can be provided in a form of oxide (such as $Al_2O_3$, $ZrO_2$, $TiO_2$, or $Nb_2O_3$) or in a form of lithium compound or the like. The inclusion of the given element range in the first coating layer can enhance the ionic conductivity on the surface of the material, improve the rate performance and gram capacity extraction of the material, stabilize the material structure, avoid direct contact between the material and the electrolyte, and improve cycling performance.

In some embodiments of this application, the thickness of the first coating layer can be 20 nm to 150 nm, for example, it can be 30 nm, 40 nm, 50 nm, 60 nm, 70 nm, 80 nm, 90 nm, 100 nm, 110 nm, 120 nm, 130 nm, 140 nm, or in a range defined by any two of the above values. The inventors have found that when the first coating layer is too thin, the possibility of it breaking/being deeply damaged during the use of the positive electrode active material increases, significantly reducing its effects in enhancing the performance of and protecting the first positive electrode active material. When the first coating layer is too thick, lithium ions need a longer transmission path to reach the active material system from the electrolyte, causing great impact on the performance of the active material. Additionally, during the sintering of the coating layer, the coating material reacts with the lithium in the internal material, reducing the available active lithium in the material, and consequently reducing the gram capacity of the material. In this application, controlling the thickness of the first coating layer within the given range can effectively avoid or reduce the above problems, thereby effectively improving the rate performance of the first positive electrode active material, and stabilizing the surface structure of the material.

In some embodiments of this application, the $D_v50$ particle size of the first positive electrode active material is 2.1 $\mu m$ to 6.3 $\mu m$, for example, it can be 2.4 $\mu m$, 2.7 $\mu m$, 3.0 $\mu m$, 3.3 $\mu m$, 3.6 $\mu m$, 3.9 $\mu m$, 4.2 $\mu m$, 4.5 $\mu m$, 4.8 $\mu m$, 5.1 $\mu m$, 5.4

$\mu$m, 5.7 $\mu$m, 6.0 $\mu$m, or in a range defined by any two of the above values. The $D_v50$ of the first positive electrode active material refers to a particle size at which the cumulative volume distribution percentage of the first positive electrode active material reaches 50%. In this application, the $D_v50$ particle size of the first positive electrode active material can be measured through laser diffraction particle size analysis. For example, according to the standard GB/T 19077-2016, a laser particle size analyzer (for example, Malvern Master Size 3000) is used. Controlling the $D_v50$ particle size of the first positive electrode active material within the given range in this application is not only conducive to preventing breakage or pulverization during charge and discharge, thereby reducing the capacity loss of the secondary battery, but also shortens the diffusion path of active ions and increases the electron conduction speed, which is beneficial to improving the cycling performance of the secondary battery. In addition, this can further ensure that the active material has a suitable active site, reducing or avoiding an excessive number of active sites in a case of too small particle size, while such excessive number increases side reactions during cycling and causes significant negative impact on cycling performance, and causing significant negative impact on power performance, where such impact is caused when a too large particle size leads to a small number of active sites. Additionally, based on the thickness of the first coating layer, controlling the $D_v50$ particle size of the first positive electrode active material within the given range can further ensure that the secondary battery has high energy density. Optionally, the $D_v50$ particle size of the first positive electrode active material can be 3.5 $\mu$m to 4.9 $\mu$m, and this can further balance the high energy density and good cycling performance of the secondary battery.

In some embodiments of this application, the surface of the second positive electrode active material can be provided with a second coating layer. The provision of the second coating layer can not only avoid contact between the second positive electrode active material and the electrolyte, thereby reducing side reactions between the second positive electrode active material and the electrolyte, but also avoid or inhibit dissolution of transition metals or doping elements in the second positive electrode active material, improving the structural stability thereof, thereby enhancing the cycling stability performance and safety of the positive electrode active material. Optionally, the second coating layer may include at least one of pyrophosphate, phosphate, and carbon. Metal ions are difficult to migrate in pyrophosphate. Selecting pyrophosphate as the coating layer material can effectively isolate the doping metal ions in the positive electrode material from the electrolyte. Further, pyrophosphate is optionally crystalline pyrophosphate. The crystalline pyrophosphate has a stable structure, and as a coating layer material, can effectively inhibit dissolution of transition metals in the active material, thereby improving cycling performance. Phosphate coating can improve the ion transport performance of the positive electrode material, facilitating the transport of lithium ions. Furthermore, phosphate can be crystalline phosphate. Crystalline phosphate and crystalline pyrophosphate have a highly matched lattice, good stability, and have excellent lithium ion conductivity. Therefore, applying them onto the second positive electrode active material can improve the stability of the positive electrode active material, and effectively reduce interfacial side reactions of the electrolyte, thereby improving the high-temperature cycle and storage performance of the battery. Carbon coating can effectively improve the conductivity and desolvation capability of the positive electrode active material. Carbon materials have good electronic conductivity. An electrochemical reaction occurs during application of the secondary battery, which requires the participation of electrons. Therefore, to promote the electron transfer between particles and the electron transfer at different positions on the particles, carbon with excellent electrical conductivity can be used for coating the positive electrode active material. It can be understood that when the second coating layer includes pyrophosphate, phosphate, and carbon, pyrophosphate, phosphate, and carbon can be located at a same coating layer or at least two coating sub-layers. For example, a pyrophosphate coating layer, a phosphate coating layer, and a carbon coating layer can be sequentially formed on the surface of the second positive electrode active material, or a phosphate coating layer, a pyrophosphate coating layer, and a carbon coating layer can be sequentially formed on the surface of the second positive electrode active material, or a composite coating layer of pyrophosphate and phosphate can be first formed on the surface of the second positive electrode active material, and then a carbon coating layer can be formed on the surface of the composite coating layer.

In some embodiments of this application, the thickness of the second coating layer can be 10 nm to 50 nm. For example, it can be 15 nm, 20 nm, 25 nm, 30 nm, 35 nm, 40 nm, 45 nm, or in a range defined by any two of the above values. Controlling the thickness of the second coating layer within the given range can not only effectively hinder the dissolution of transition metals or doping elements in the second positive electrode active material but also prevent the thickness of the coating from being too large, where such large thickness affects lithium ion migration and energy density of the battery. As a result, it is possible to further improve the kinetic performance, cycling performance, and safety of the battery without sacrificing the gram capacity of the second positive electrode active material.

In a specific example, the second coating layer may include a first sub-coating layer, a second sub-coating layer, and a third sub-coating layer. The first sub-coating layer can coat the second positive electrode active material and include crystalline pyrophosphate. The second sub-coating layer may include crystalline phosphate and coat the first sub-coating layer. The third sub-coating layer can be carbon and coat the second sub-coating layer. Pyrophosphate, as the first sub-coating layer, can effectively isolate the doping metal ions in the second positive electrode active material from the electrolyte. Crystalline pyrophosphate coating can effectively inhibit the dissolution of transition metals in the second positive electrode active material, improving cycling performance. Crystalline phosphate, as the second sub-coating layer, has a high lattice match with the crystalline pyrophosphate in the first sub-coating layer, is more stable than pyrophosphate, and has excellent lithium ion conductivity. It helps to improve the stability of the positive electrode active material and reduce the interfacial side reactions of the positive electrode active material and electrolyte. The third sub-coating layer can enhance electron transport between particles, improve the electronic conductivity of the positive electrode active material, and effectively improve the conductivity and desolvation capability of the positive electrode active material. Furthermore, the thickness of the first sub-coating layer can be 1 nm to 10 nm, for example, 3 nm, 4 nm, 5 nm, 6 nm, 7 nm, 8 nm, 9 nm, or in any range defined by any value of the foregoing values. The thickness of the first sub-coating layer falling within the given range can avoid possible negative impact caused by a too large thickness on the kinetic performance of the positive electrode active material, and can prevent the possible issue of not effectively hindering migration of transition metal ions caused by a too small thickness. The thickness of the second sub-coating layer can be 2 nm to 15 nm, for example, 3 nm, 4 nm, 5 nm, 6 nm, 7 nm, 8 nm, 9 nm, 10 nm, 11 nm, 12 nm, 13 nm, 14 nm, or in any range defined by any value of the foregoing value. The thickness of the second sub-coating layer being too large may affect the overall platform voltage of the positive electrode active material. When the second sub-coating layer has a thickness within the given range, its surface structure is stable, and the side reactions with the electrolyte are small, effectively alleviating interfacial side reactions, thereby enhancing the high-temperature cycling performance and high-temperature storage performance of the battery. The thickness of the third sub-coating layer can be 2 nm to 25 nm, for example, 4 nm, 6 nm, 8 nm, 10 nm, 12 nm, 14 nm, 16 nm, 18 nm, 20 nm, 22 nm, 24 nm, or in any range defined by any value of the foregoing values. The thickness of the third sub-coating layer falling within the given range can enhance the conductivity of the positive electrode active material and increase the compacted density of the positive electrode plate, and avoids the issue of an excessively large coating thickness affecting the compacted density of the electrode plate when the sub-coating layer contains amorphous carbon.

In this application, the thickness of each coating layer can be measured through FIB, and the specific method may include the following steps: randomly selecting a single particle from the positive electrode active material powder to be tested, cutting a thin slice with a thickness of about 100 nm from the middle of the selected particle or near the middle, and performing TEM test on the thin slice to measure the thickness of the coating layer where the measurement is performed for 3 to 5 positions and an average value is taken.

In some embodiments of this application, the $D_v50$ particle size of the second positive electrode active material can be 0.25 $\mu$m to 1.49 $\mu$m, for example, 0.3 $\mu$m, 0.4 $\mu$m, 0.5 $\mu$m, 0.6 $\mu$m, 0.7 $\mu$m, 0.8 $\mu$m, 0.9 $\mu$m, 1.0 $\mu$m, 1.1 $\mu$m, 1.2 $\mu$m, 1.3 $\mu$m, 1.4 $\mu$m, or in a range defined by any two of the above values. The $D_v50$ of the second positive electrode active material refers to a particle size at which the cumulative volume distribution percentage of the second positive electrode active material reaches 50%. In this application, the $D_v50$ particle size of the second positive electrode active material can be measured through laser diffraction particle size analysis. For example, according to the standard GB/T 19077-2016, a laser particle size analyzer (for example, Malvern Master Size 3000) is used. Controlling the $D_v50$ particle size of the second positive electrode active material within the given range in this application not only is conducive to preventing breakage or pulverization during charge and discharge, thereby reducing the capacity loss of the secondary battery, but also can shorten the diffusion path of active ions and increase the electron conduction speed, which is beneficial to improving the cycling performance of the secondary battery. In addition, this can also ensure that the active material has suitable active sites, and balance cycling performance and power performance. Additionally, controlling the $D_v50$ particle size of the second positive electrode active material within the given range is beneficial to helping the $D_v50$ particle size range of the first positive electrode active material to offer a desired compacted density, avoiding large gaps between the positive electrode active material particles. Furthermore, based on the thickness of the second coating layer, controlling the $D_v50$ particle size of the second positive electrode active material within the given range can further ensure that the secondary battery has a high energy density, and reduce the lattice change rate and dissolution of transition metals or doping elements in the second positive electrode active material, thereby enhancing the high-temperature cycle stability and high-temperature storage performance of the secondary battery. Optionally, the $D_v50$ particle size of the second positive electrode active material can be 0.5 $\mu$m to 0.9 $\mu$m, and this can further balance the high energy density and good cycling performance of the secondary battery.

In some embodiments of this application, the first positive electrode active material and the second positive electrode active material satisfy $0.02 \leq \dfrac{n_{(A')}}{n_{(N)}} \leq 1.4$ and $0.15 \leq \dfrac{n_{(A')}}{n_{(P)}} \leq 1.50$, where $n_{(Ni)}$ is a molar amount of element Ni in the positive electrode plate, measured in mol; $n_{(A')}$ is a molar amount of element A' in the positive electrode plate, measured in mol; and $n_{(P)}$ is a molar amount of element P in the positive electrode plate, measured in mol. For example, the value of $\dfrac{n_{(A')}}{n_{(N)}}$ can be 0.03, 0.05, 0.08, 0.1, 0.12, 0.15, 0.18, 0.2, 0.25, 0.3, 0.4, 0.5, 0.6, 0.7, 0.8, 0.9, 1.0, 1.1, 1.2, 1.3, or in a range defined by any two of the above values. For example, the value of $\dfrac{n_{(A')}}{n_{(P)}}$ can be 0.18, 0.2, 0.25, 0.3, 0.4, 0.45, 0.5, 0.55, 0.6, 0.65, 0.7, 0.75, 0.8, 0.9, 1.0, 1.1, 1.2, 1.3, 1.4, or in a range defined by any two of the above values. The molar amounts of elements in the positive electrode plate can be obtained through ICP test. For example, the following operations can be performed. About 0.4 g of dry positive electrode plate (precise to 0.0001 g) or 1 g of wet positive electrode plate (precise to 0.0001 g) are put into a 30 ml digestion vessel, and one digestion vessel with no sample is used as a blank sample. The digestion vessel containing the positive electrode plate sample is moved into a fume hood, with 12 ml of reverse aqua regia added. The reverse aqua regia is added along the inner wall of the digestion vessel, so that the residual sample on the inner wall is flushed to the bottom of the vessel. Then a top cover, a thermal insulation pad, a gasket, a microwave digestion apparatus, and a nut are installed in sequence, and the nut is tightened with a wrench. Then the microwave digestion instrument is turned on, an optical fiber sensor of the microwave digestion instrument is inserted at the bottom of the digestion vessel containing the sample, and the digestion vessel is horizontally placed in the microwave digestion instrument for digestion (digestion procedure: reach 120°C in 6 min and hold that temperature for 8 min, reach 160°C in 5 min and hold that temperature for 8 min, and reach 180°C in 5 min and hold that temperature for 5 min). After this, the digestion vessel is cooled to room temperature, taken out, and placed in the fume hood. The nut is slowly unscrewed for releasing gas, and the previously installed parts are uninstalled in sequence. The solution in the digestion vessel is transferred to a 100 ml volumetric flask through a funnel (with filter paper used), and then the digestion vessel is rinsed with ultrapure water. The rinsed solution is also transferred into the volumetric flask. Each rinse uses 10 ml of ultrapure water. The solution in the 100 ml volumetric flask is shaken to uniformity. A pipette is used to take 1 ml of the stirred uniform solution to add it to another 100 ml volumetric flask. Then ultrapure water is added to reach the volume (the total solution reaches 100 ml), and finally ICP-OES is used to test the sample solution. In preparing reverse aqua regia, 1000 ml of ultrapure water can be poured into a 2500 ml glass bottle, and then 750 ml of concentrated nitric acid and 250 ml of concentrated hydrochloric acid are added sequentially. They are stirred to uniformity and set aside. A commercial concentrated nitric acid solution with a mass fraction of 68% can be purchased to serve as the concentrated nitric acid, and a commercial concentrated hydrochloric acid solution with a mass fraction of 68% can be purchased to serve as the concentrated hydrochloric acid. Alternatively, mass proportions of hydrogen chloride gas and ultrapure water are 68% and 32% respectively, and the hydrogen chloride gas is added to the ultrapure water to obtain the required concentrated hydrochloric acid after complete dissolution.

Compared with the second positive electrode active material $Li_{1+x}M_{3n}Mn_{1-y}A'_yP_{1-z}E_zO_4$, the first positive electrode active material $Li_aNi_bCo_cM_{1d}M_{2e}O_fR'_g$ has a higher specific capacity and better conductivity, but a lower lattice volume change rate after lithium intercalation and deintercalation, which is not conducive to matching volume swelling of the negative electrode after lithium intercalation. Furthermore, increasing the Ni percentage in the first positive electrode active material helps to improve the energy density of the battery but is not conducive to the lattice shrinkage of the composite positive electrode, which damages the cycling performance. Doping other elements at the manganese site of the second positive electrode active material can improve lattice shrinkage thereof during lithium intercalation and deintercalation, enhancing cycling performance, but excessive doping damages the energy density of the battery. Selecting an appropriate doping amount can ensure both the energy density and cycling performance of the battery. For example, in a specific example, when the manganese site contains both element manganese and element iron, a high manganese to iron ratio can raise the voltage platform, which is beneficial to improving the energy density of the battery, but a too high manganese to iron ratio may lead to a lot of trivalent manganese in the delithiated state, which may destroy the solid solution structure. This reduces the specific capacity and cycle capacity retention rate of the material, deteriorates the cycling performance, and affects the lifespan of the positive electrode. In this application, the Ni percentage in the positive electrode plate is provided by the first positive electrode active material.

Making $\dfrac{n_{(A')}}{n_{(N)}}$ and $\dfrac{n_{(A')}}{n_{(P)}}$ meet the given ranges can not only ensure that the first positive electrode active material and the second positive electrode active material have an appropriate mixing ratio, but also allow the second positive electrode active material to have an appropriate manganese site doping percentage, achieving good cycling performance, thereby further balancing the high energy density and good cycling performance of the secondary battery.

Optionally, $0.4 \le \dfrac{n_{(A')}}{n_{(P)}} \le 1.1$. This can further ensure that the first positive electrode active material and the second positive electrode active material have an appropriate mixing ratio, and the second positive electrode active material has good cycling performance, thereby further balancing the high energy density and good cycling performance of the secondary battery. More optionally, $0.03 \le \dfrac{n_{(A')}}{n_{(N)}} \le 0.20$. When the first positive electrode active material does not contain element A', A' can be provided only by the second positive electrode active material. In this case, further making $\dfrac{n_{(A')}}{n_{(N)}}$ meet the given range conditions can further balance the high energy density and good cycling performance of the secondary battery.

In some embodiments of this application, $0.001 \leq n_{(Ni)} \leq 0.0026$. For example, $n_{(Ni)}$ can be 0.0011, 0.0013, 0.0015, 0.0017, 0.0019, 0.0021, 0.0023, 0.0025, or in a range defined by any two of the above values. In the mixed positive electrode active material, element Ni is provided by the first positive electrode active material. Increasing the element Ni proportion in the first positive electrode active material helps to improve the energy density of the battery, but is not conducive to the lattice shrinkage of the composite positive electrode, which compromises the cycling performance. In this application, making the element Ni proportion $n_{(Ni)}$ in the positive electrode plate meet the given range can further balance the high energy density and good cycling performance of the secondary battery. Optionally, $0.0014 < n_{(Ni)} \leq 0.002$, thereby further balancing the high energy density and good cycling performance of the secondary battery.

In some embodiments of this application, $0.00007 \leq n_{(A')} \leq 0.00075$. For example, $n_{(A')}$ can be 0.0001, 0.00015, 0.0002, 0.00025, 0.0003, 0.0004, 0.0005, 0.0006, 0.0007, or in a range defined by any two of the above values. Doping other elements at the manganese site of the second positive electrode active material can improve its lattice shrinkage during lithium intercalation and deintercalation, thereby enhancing cycling performance, but an excessive doping amount damages the energy density of the battery. In this application, making the amount $n_{(A')}$ of element A' in the positive electrode plate meet the given range, can further balance the high energy density and good cycling performance of the secondary battery. Optionally, $0.0001 \leq n_{(A')} \leq 0.00032$, thereby further balancing the high energy density and good cycling performance of the secondary battery.

In some embodiments of this application, depending on the type of secondary battery, the battery housing can be an aluminum-plastic film or a metal housing assembly. The metal housing assembly may further include a prismatic housing assembly and a cylindrical housing assembly. When the battery housing is a metal housing assembly, it typically further includes a housing with an opening on at least one side and a cover for sealing the opening. The composition of the negative electrode plate, the specific material or type of the separator can use common materials or types in the field, and the composition of the electrolyte can also use common compositions in the field. The selection of positive electrode active materials in the positive electrode plate has been detailed in the previous sections and is not repeated here. Skilled persons in the art can also flexibly choose a binding agent, a conductive agent, and the thickness of the positive electrode active material layer based on actual needs.

In some embodiments of this application, the secondary battery can be either a laminated battery or a wound battery. The wound battery can be a prismatic battery or a cylindrical battery. Optionally, the battery can be a cylindrical battery. Depending on the type of battery, the positive electrode plate, negative electrode plate, and separator can be stacked to form a laminated cell, or they can be stacked and then wound to form a wound body.

In some embodiments of this application, the secondary battery can be a single cell or a battery module assembled from multiple cells. The number of cells included in the battery module can be multiple, and the specific number can be adjusted according to the application and capacity of the battery module. Furthermore, the battery module may further include a packaging assembly with an accommodating space. The assembly may include a bottom plate, side plates, a cover plate, and the like.

In some embodiments of this application, the battery modules may be further assembled into a battery pack, and a quantity of battery modules included in the battery pack may be adjusted based on application and capacity of the battery pack.

Additionally, this application further provides an electric apparatus that includes: the secondary battery according to the first aspect of this application.

The secondary battery, such as a cell, battery module, or battery pack, can be used as a power source of the electric apparatus or as an energy storage unit of the electric apparatus. The electric apparatus may include but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system. In a specific example, the electric apparatus can be a vehicle.

The electric apparatus can choose the specific type of battery according to its usage need. For example, it may choose cells, battery modules, or battery packs.

In an example, the electric apparatus may be a battery electric vehicle, a hybrid electric vehicle, a plug-in hybrid electric vehicle, or the like. To satisfy a requirement of the electric apparatus for high power and high energy density of the battery, a battery pack or a battery module may be used.

In another example, the electric apparatus may be a mobile phone, a tablet computer, or a notebook computer, or the like. Such electric apparatus is generally required to be light and thin and may use a battery cell as its power source.

The following describes examples of this application. The examples described below are illustrative and only used for explaining this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

**Preparation and testing method of the secondary battery:**

1. Laminated soft pouch battery:

(1) Preparation of positive electrode plate:

A positive electrode active material, polyvinylidene fluoride (PVDF), and conductive carbon were added to a certain amount of N-methyl-2-pyrrolidone (NMP), with the mass ratio of the positive electrode active material, polyvinylidene fluoride and conductive carbon being 90:5:5. The substances were stirred in a drying room to make a uniform slurry, with the viscosity controlled to 3000 mPa·S to 10000 mPa·S. The slurry was applied onto an aluminum foil, followed by drying to make a positive electrode plate.

(2) Preparation of negative electrode plate:

Graphite, sodium carboxymethyl cellulose (CMC), styrene-butadiene rubber (SBR), and conductive carbon were added to a certain amount of deionized water, with the mass ratio of the graphite, sodium carboxymethyl cellulose, styrene-butadiene rubber, and conductive carbon being 90:2:3:5. The substances were stirred to make a uniform slurry, with the viscosity controlled to 3000 mPa·S to 10000 mPa·S. The slurry was applied onto a copper foil, followed by drying to make a negative electrode plate.

(3) Preparation of laminated soft pouch battery:

The prepared positive electrode plate, the negative electrode plate, and a separator (porous polymer film of polyethylene (PE)) were made into a corresponding cell in a Z-shaped laminated structure. The cell was vacuum dried at 90°C for 12 h. Then ultrasonic welding was performed to weld positive and negative electrode tabs, with an aluminum tab at the positive electrode and a nickel tab at the negative electrode, and the positive and negative electrode tabs were located on the same side of the cell. The cell welded with the tabs was put into an aluminum-plastic film of an appropriate size for top-side packaging, with a conventional packaging temperature of 145°C. The electrolyte (the electrolyte used was made of 1 mol/L $LiPF_6$/(ethylene carbonate (EC) + diethyl carbonate (DEC) + dimethyl carbonate (DMC)) (at a volume ratio of 1:1:1) + 5wt% fluoroethylene carbonate (FEC)) was injected. Standing, formation, aging, degassing, secondary sealing, and capacity testing were performed to obtain a prepared laminated soft pouch battery.

2. Perform cycling test on the laminated soft pouch battery prepared in (3) at 25°C:

In a constant temperature environment of 25°C, and at 2.5 V to 4.4 V, the prepared laminated soft pouch battery was charged to 4.4 V at $0.5C_0$, charged at a constant voltage of 4.4 V to a current of less than or equal to $0.05C_0$, left standing for 5 min, and discharged at $1C_0$ to 2.5 V The capacity was recorded as $C_n$ (n=1,2,3...). The above operation was repeated, and the capacity retention rate was calculated according to the ratio of $C_n/C_3$. When $C_n/C_3 \times 100\% = 80\%$, the corresponding number of cycles was used as an indicator of cycling capacity. After the cycling test ended, disassembly was performed in a drying room or glove box to obtain a negative electrode plate. The surface of the electrode plate was rinsed with the main solvent of the electrolyte of the battery to remove residual lithium salt crystal. A $1 \times 2$ $cm^2$ region at the middle of the electrode plate was taken and transferred in a vacuum transfer apparatus or an inert atmosphere. A cross-section was made at low temperature with an argon ion beam polishing (CP) device. After cutting, the sample was attached to the cross-sectional sample stage with conductive tape, and transferred to the SEM vacuum chamber for sample observation to obtain the cross-sectional morphology of the sample. Whether lithium precipitation occurs on the negative electrode interface is observed.

**Example 1**

In the laminated soft pouch battery:

(i) Positive electrode plate

The layer count $N_1$ of the positive electrode plate was 15; the thickness $d_{positive}$ of a single layer of positive electrode plate was 0.13 mm; the compacted density of the active material layer of the positive electrode plate was 3.10 g/cm$^3$; the first positive electrode active material was NCM523; the $D_v50$ particle size of the first positive electrode active material was 4.1 $\mu$m; the second positive electrode active material was $LiMn_{0.6}Fe_{0.4}PO_4$; the $D_v50$ particle size of the second positive electrode active material was 0.81 $\mu$m; and the first positive electrode active material and the second positive electrode active material satisfied: $\dfrac{n_{(A')}}{n_{(N)}} = 0.18$ and $\dfrac{n_{(A')}}{n_{(P)}} = 0.4$, where A' was element Fe.

(ii) Negative electrode plate

The layer count $N_2$ of the negative electrode plate was 16, the thickness $d_{negative}$ of a single layer of negative electrode plate was 0.13 mm, and the compacted density of the active material layer of the negative electrode plate was 1.70 g/cm$^3$.

(iii) Separator

The layer count $N_3$ of the separator was 16, and the thickness $d_{separator}$ of a single layer of separator was 0.011 mm.

(iv) The inner cavity thickness $d_{housing}$ of the battery housing was 4.5 mm.
(vi) The electrolyte injection coefficient of the secondary battery was 2.73 g/Ah.

(v) The group margin was: $\dfrac{d_{positive} \times N_1 + d_{negative} \times N_2 + d_{separator} \times N_3}{d_{housing}} = 0.93$.

**Examples 2 to 5 and Comparative Examples 1 to 3**

Examples 2 to 5 and Comparative Examples 1 and 2 differed from Example 1 in that the inner cavity thicknesses of the battery housings and the group margins of the secondary batteries were different. See Table 1 for details.
Comparative Example 3 differed from Example 1 in that the composition of the positive electrode active material was different. Comparative Example 3 did not contain the second positive electrode active material. See Table 1 for details.

**Examples 6 to 13**

Examples 6 to 13 differed from Example 1 in that the electrolyte injection coefficients of the secondary batteries were different. See Table 1 for details.

**Examples 14 and 15**

Examples 14 and 15 differed from Example 1 in that the compositions of the second positive electrode active material were different. See Table 1 for details.

**Examples 16 to 20**

Examples 16 to 20 differed from Example 1 in that the values of $\dfrac{n_{(A')}}{n_{(N)}}$ in the first positive electrode active material and the second positive electrode active material were different (A' is element Fe). See Table 1 for details.

**Examples 21 to 24**

Examples 21 to 24 differed from Example 1 in that the $D_v50$ particle sizes of the first positive electrode active materials were different. See Table 1 for details.

**Examples 25 to 28**

Examples 25 to 28 differed from Example 1 in that the $D_v50$ particle sizes of the second positive electrode active materials were different. See Table 1 for details.

**Cycling performance tests were conducted on the secondary batteries assembled in Examples 1 to 28 and Comparative Examples 1 to 3. The test results are detailed in Table 1.**

Table 1 Differences and relevant test results of Examples 1 to 28 and Comparative Examples 1 to 3

| Item | Positive electrode plate | | | | | | | | | Whether lithium precipitation occurs at negative electrode interface after battery disassembly at $C_n/C_3$=80% | Number of cycles corresponding to $C_n/C_3$=80% |
|---|---|---|---|---|---|---|---|---|---|---|---|
| | First positive electrode active material | Second positive electrode active material | $\dfrac{n_{(A)}}{n_{(N)}}$ | $D_v50$ particle size of first positive electrode active material | $D_v50$ particle size of second positive electrode active material | Total thickness of positive and negative electrode plates and separator (mm) | Inner cavity thickness $d_{housing}$ (mm) | Electrolyte injection coefficient (g/Ah) | Group margin | | |
| Example 1 | NCM523 | $LiMn_{0.6}Fe_{0.4}PO_4$ | 0.18 | 4.1 μm | 0.81 μm | 4.2 | 4.5 | 2.73 | 0.93 | No | 1442 |
| Example 2 | NCM523 | $LiMn_{0.6}Fe_{0.4}PO_4$ | 0.18 | 4.1 μm | 0.81 μm | 4.2 | 4.65 | 2.73 | 0.90 | No | 1005 |
| Example 3 | NCM523 | $LiMn_{0.6}Fe_{0.4}PO_4$ | 0.18 | 4.1 μm | 0.81 μm | 4.2 | 4.6 | 2.73 | 0.91 | No | 1258 |
| Example 4 | NCM523 | $LiMn_{0.6}Fe_{0.4}PO_4$ | 0.18 | 4.1 μm | 0.81 μm | 4.2 | 4.46 | 2.73 | 0.94 | No | 1291 |
| Example 5 | NCM523 | $LiMn_{0.6}Fe_{0.4}PO_4$ | 0.18 | 4.1 μm | 0.81 μm | 4.2 | 4.42 | 2.73 | 0.95 | No | 1087 |
| Comparative Example 1 | NCM523 | $LiMn_{0.6}Fe_{0.4}PO_4$ | 0.18 | 4.1 μm | 0.81 μm | 4.2 | 4.32 | 2.73 | 0.97 | Yes | 454 |
| Comparative Example 2 | NCM523 | $LiMn_{0.6}Fe_{0.4}PO_4$ | 0.18 | 4.1 μm | 0.81 μm | 4.2 | 4.8 | 2.73 | 0.88 | No | 647 |
| Comparative Example 3 | NCM523 | - | - | 4.1 μm | - | 4.2 | 4.5 | 2.73 | 0.93 | No | 521 |
| Example 6 | NCM523 | $LiMn_{0.6}Fe_{0.4}PO_4$ | 0.18 | 4.1 μm | 0.81 μm | 4.2 | 4.5 | 2.5 | 0.93 | No | 912 |
| Example 7 | NCM523 | $LiMn_{0.6}Fe_{0.4}PO_4$ | 0.18 | 4.1 μm | 0.81 μm | 4.2 | 4.5 | 2.62 | 0.93 | No | 1127 |
| Example 8 | NCM523 | $LiMn_{0.6}Fe_{0.4}PO_4$ | 0.18 | 4.1 μm | 0.81 μm | 4.2 | 4.5 | 2.7 | 0.93 | No | 1335 |
| Example 9 | NCM523 | $LiMn_{0.6}Fe_{0.4}PO_4$ | 0.18 | 4.1 μm | 0.81 μm | 4.2 | 4.5 | 2.75 | 0.93 | No | 1402 |
| Example 10 | NCM523 | $LiMn_{0.6}Fe_{0.4}PO_4$ | 0.18 | 4.1 μm | 0.81 μm | 4.2 | 4.5 | 2.8 | 0.93 | No | 1373 |
| Example 11 | NCM523 | $LiMn_{0.6}Fe_{0.4}PO_4$ | 0.18 | 4.1 μm | 0.81 μm | 4.2 | 4.5 | 2.9 | 0.93 | No | 1148 |
| Example 12 | NCM523 | $LiMn_{0.6}Fe_{0.4}PO_4$ | 0.18 | 4.1 μm | 0.81 μm | 4.2 | 4.5 | 3 | 0.93 | No | 883 |
| Example 13 | NCM523 | $LiMn_{0.6}Fe_{0.4}PO_4$ | 0.18 | 4.1 μm | 0.81 μm | 4.2 | 4.5 | 2.4 | 0.93 | Yes | 328 |
| Example 14 | NCM523 | $LiFePO_4$ | 0.18 | 4.1 μm | 0.81 μm | 4.2 | 4.5 | 2.73 | 0.93 | No | 1174 |

| Item | Positive electrode plate | | | | | | | | | Whether lithium precipitation occurs at negative electrode interface after battery disassembly at $C_n/C_3$=80% | Number of cycles corresponding to $C_n/C_3$=80% |
|---|---|---|---|---|---|---|---|---|---|---|---|
| | First positive electrode active material | Second positive electrode active material | $\dfrac{n_{(A)}}{n_{(N)}}$ | $D_v50$ particle size of first positive electrode active material | $D_v50$ particle size of second positive electrode active material | Total thickness of positive and negative electrode plates and separator (mm) | Inner cavity thickness $d_{housing}$ (mm) | Electrolyte injection coefficient (g/Ah) | Group margin | | |
| Example 15 | NCM523 | LiFePO$_4$, LiMn$_{0.6}$Fe$_{0.4}$PO$_4$ | 0.18 | 4.1 $\mu$m | 0.81 $\mu$m | 4.2 | 4.5 | 2.73 | 0.93 | No | 1145 |
| Example 16 | NCM523 | LiMn$_{0.6}$Fe$_{0.4}$PO$_4$ | 0.02 | 4.1 $\mu$m | 0.81 $\mu$m | 4.2 | 4.5 | 2.73 | 0.93 | No | 1003 |
| Example 17 | NCM523 | LiMn$_{0.6}$Fe$_{0.4}$PO$_4$ | 0.15 | 4.1 $\mu$m | 0.81 $\mu$m | 4.2 | 4.5 | 2.73 | 0.93 | No | 1325 |
| Example 18 | NCM523 | LiMn$_{0.6}$Fe$_{0.4}$PO$_4$ | 0.2 | 4.1 $\mu$m | 0.81 $\mu$m | 4.2 | 4.5 | 2.73 | 0.93 | No | 1158 |
| Example 19 | NCM523 | LiMn$_{0.6}$Fe$_{0.4}$PO$_4$ | 0.01 | 4.1 $\mu$m | 0.81 $\mu$m | 4.2 | 4.5 | 2.73 | 0.93 | No | 873 |
| Example 20 | NCM523 | LiMn$_{0.6}$Fe$_{0.4}$PO$_4$ | 1.5 | 4.1 $\mu$m | 0.81 $\mu$m | 4.2 | 4.5 | 2.73 | 0.93 | No | 842 |
| Example 21 | NCM523 | LiMn$_{0.6}$Fe$_{0.4}$PO$_4$ | 0.18 | 2.2 $\mu$m | 0.81 $\mu$m | 4.2 | 4.5 | 2.73 | 0.93 | No | 1073 |
| Example 22 | NCM523 | LiMn$_{0.6}$Fe$_{0.4}$PO$_4$ | 0.18 | 3 $\mu$m | 0.81 $\mu$m | 4.2 | 4.5 | 2.73 | 0.93 | No | 1045 |
| Example 23 | NCM523 | LiMn$_{0.6}$Fe$_{0.4}$PO$_4$ | 0.18 | 5 $\mu$m | 0.81 $\mu$m | 4.2 | 4.5 | 2.73 | 0.93 | No | 1278 |
| Example 24 | NCM523 | LiMn$_{0.6}$Fe$_{0.4}$PO$_4$ | 0.18 | 6.2 $\mu$m | 0.81 $\mu$m | 4.2 | 4.5 | 2.73 | 0.93 | No | 932 |
| Example 25 | NCM523 | LiMn$_{0.6}$Fe$_{0.4}$PO$_4$ | 0.18 | 4.1 $\mu$m | 0.3 $\mu$m | 4.2 | 4.5 | 2.73 | 0.93 | No | 1125 |
| Example 26 | NCM523 | LiMn$_{0.6}$Fe$_{0.4}$PO$_4$ | 0.18 | 4.1 $\mu$m | 0.5 $\mu$m | 4.2 | 4.5 | 2.73 | 0.93 | No | 1359 |
| Example 27 | NCM523 | LiMn$_{0.6}$Fe$_{0.4}$PO$_4$ | 0.18 | 4.1 $\mu$m | 0.9 $\mu$m | 4.2 | 4.5 | 2.73 | 0.93 | No | 1301 |
| Example 28 | NCM523 | LiMn$_{0.6}$Fe$_{0.4}$PO$_4$ | 0.18 | 4.1 $\mu$m | 1.4 $\mu$m | 4.2 | 4.5 | 2.73 | 0.93 | No | 985 |

**Results and conclusions:**

It can be seen from the examples and comparative examples that using the battery design solution of this application can improve the cycling performance and safety performance of batteries with a high group margin. Specifically, it can be seen from Examples 1 to 5 and Comparative Examples 1 to 3 that mixing the nickel-cobalt-manganese ternary positive electrode active material with the lithium manganese iron phosphate positive electrode active material and controlling the group margin of the battery within the range of 0.9 to 0.95 can allow the number of cycles of the battery corresponding to an 80% capacity retention rate to increase to over 1000, and with no lithium precipitation. Furthermore, it can further be seen from data in Table 1 that after mixing the nickel-cobalt-manganese ternary positive electrode active material with the lithium manganese iron phosphate positive electrode active material, the group margin of the battery also affects the cycling performance and safety of the battery. A too high or too low group margin is not conducive to improving the cycling performance of the battery, and a too high group margin further leads to lithium precipitation, affecting the safety of the battery. The group margin can optionally be 0.91 to 0.94. It can be seen from Examples 1, and 6 to 13 that for the battery design of the above examples of this application, the electrolyte injection coefficient also affects the cycling performance and safety of the battery to a certain extent. As the electrolyte injection coefficient increases, the range thereof can optionally be 2.5 g/Ah to 3.0 g/Ah, more optionally 2.62 g/Ah to 2.90 g/Ah. It can be seen from Examples 1, and 14 to 20 that for the battery design of the above examples of this application, the composition of the second positive electrode active material and the molar ratio of element A' to element Ni also affect the cycling performance and safety of the battery to a certain extent. The main reason is that when the second positive electrode active material changes, the improvement effect on the cycling performance and safety performance of the battery after it is mixed with the nickel-cobalt-manganese ternary positive electrode active material may also change. The molar ratio of element A' to element Ni limits the mixing ratio of the second positive electrode active material to the nickel-cobalt-manganese ternary positive electrode active material to a certain extent. Different mixing ratios of the two have different effects on improving the cycling performance and safety performance of the battery. The molar ratio of element A' to element Ni can optionally be 0.02 to 1.5, more optionally 0.02 to 0.2. It can be seen from Examples 1, and 21 to 28 that for the battery design of the above examples of this application, the particle size of the first positive electrode active material and the particle size of the second positive electrode active material also affect the cycling performance and safety of the battery to a certain extent. The main reason is that the particle size changes of the two affect the active sites, compacted density, and diffusion paths of active ions of the positive electrode active materials. The $D_v50$ particle size of the first positive electrode active material can optionally be 2.1 $\mu$m to 6.3 $\mu$m, and the $D_v50$ particle size of the second positive electrode active material can optionally be 0.25 $\mu$m to 1.49 $\mu$m.

In conclusion, it should be noted that the above examples are merely intended for describing the technical solutions of this application but not for limiting this application. Although this application is described in detail with reference to the foregoing examples, persons of ordinary skill in the art should understand that they may still make modifications to the technical solutions described in the foregoing examples or make equivalent replacements to some or all technical features thereof without departing from the scope of the technical solutions of the examples of this application. They should all be covered in the scope of claims and summary in this application. In particular, as long as there is no structural conflict, the various technical features mentioned in the embodiments can be combined in any manner. This application is not limited to the specific embodiments disclosed in this specification, but includes all technical solutions falling within the scope of the claims.

**Claims**

1. A secondary battery, comprising: a battery housing and a positive electrode plate, a negative electrode plate, a separator, and an electrolyte that are disposed within the battery housing, wherein the separator is arranged between the positive electrode plate and the negative electrode plate, wherein the positive electrode plate comprises a positive electrode active material layer, and the positive electrode active material layer comprises a first positive electrode active material and a second positive electrode active material, wherein

   the first positive electrode active material comprises $Li_aNi_bCo_cM_{1d}M_{2e}O_fR'_g$, wherein $0.75 \leq a \leq 1.2$, $0 < b < 1$, $0 < c < 1$, $0 < d < 1$, $0 \leq e \leq 0.2$, $1 \leq f \leq 2.5$, $0 \leq g \leq 1$, $f+g \leq 3$, $M_1$ is element Mn and/or element Al, $M_2$ comprises one or more elements of Zr, Zn, Cu, Cr, Mg, Fe, V, Ti, Sr, Sb, Y, W, and Nb, and R' comprises one or more elements of N, F, S, and Cl; the second positive electrode active material comprises $Li_{1+x}M_{3n}Mn_{1-y}A'_yP_{1-z}E_zO_4$, wherein $-0.100 \leq x \leq 0.100$, $0 \leq n \leq 1.1$, $0.001 \leq y \leq 1$, $0 \leq z \leq 0.100$, $M_3$ comprises one or more elements of Zn, Al, Na, K, Mg, Nb, Mo, and W, A' comprises one or more elements of Zn, Al, Na, K, Mg, Mo, W, Ti, V, Zr, Fe, Ga, Sn, Sb, Nb, and Ge, and E comprises one or more elements of B, Si, N, S, F, Cl, and Br; and the secondary battery satisfies:

$$0.9 \leq \frac{d_{positive} \times N_1 + d_{negative} \times N_2 + d_{separator} \times N_3}{d_{housing}} \leq 0.95$$

wherein $d_{positive}$ represents a thickness of a single layer of positive electrode plate, measured in mm; $d_{negative}$ represents a thickness of a single layer of negative electrode plate, measured in mm; $d_{separator}$ represents a thickness of a single layer of separator, measured in mm; $d_{housing}$ represents an inner cavity thickness of the battery housing, measured in mm; $N_1$ represents a layer count of the positive electrode plate within the battery housing; $N_2$ represents a layer count of the negative electrode plate within the battery housing; and $N_3$ represents a layer count of the separator within the battery housing.

2. The secondary battery according to claim 1, wherein the second positive electrode active material comprises a positive electrode active material satisfying at least one of the following conditions:

(i) y=1, and n=0, wherein the second positive electrode active material is $Li_{1+x}A'P_{1-z}E_zO_4$, wherein A' is element Fe, or A' is element Fe and one or more elements of Zn, Al, Na, K, Mg, Mo, W, Ti, V, Zr, Fe, Ga, Sn, Sb, Nb, and Ge;
(ii) $0.001 \leq y \leq 0.500$, and n=0, wherein the second positive electrode active material is $Li_{1+x}Mn_{1-y}A'_yP_{1-z}E_zO_4$; and
(iii) $0.001 \leq y \leq 0.500$, and $0.9 \leq n \leq 1.1$, wherein the second positive electrode active material is $Li_{1+x}M_{3n}Mn_{1-y}A'_yP_{1-z}E_zO_4$.

3. The secondary battery according to claim 1 or 2, wherein

$$0.91 \leq \frac{d_{positive} \times N_1 + d_{negaive} \times N_2 + d_{separator} \times N_3}{d_{housing}} \leq 0.94.$$

4. The secondary battery according to any one of claims 1 to 3, wherein

0.11 mm$\leq d_{positive} \leq$0.16 mm, optionally, 0.12 mm$\leq d_{positive} \leq$0.14 mm; and
0.15 mm$\leq d_{negative} \leq$0.20 mm, optionally, 0.16 mm$\leq d_{negative} \leq$0.18 mm.

5. The secondary battery according to any one of claims 1 to 4, wherein 0.009 mm$\leq d_{separator}$<0.014 mm, optionally, 0.0011 mm$\leq d_{separator} \leq$0.012 mm.

6. The secondary battery according to any one of claims 1 to 5, wherein when the positive electrode plate is in a fully delithiated state, the positive electrode active materials have an average lattice volume shrinkage rate of not less than 2.7%.

7. The secondary battery according to any one of claims 1 to 6, wherein when the positive electrode plate is in a fully delithiated state, the second positive electrode active material has a lattice volume shrinkage rate of 2.7% to 6.9%.

8. The secondary battery according to any one of claims 1 to 7, wherein when the positive electrode plate is in a fully delithiated state, the positive electrode active materials have an average lattice volume shrinkage rate of 2.7% to 4.2%.

9. The secondary battery according to any one of claims 1 to 8, wherein the active material layer of the positive electrode plate has a compacted density of 3.10 g/cm$^3$ to 3.50 g/cm$^3$, optionally 3.15 g/cm$^3$ to 3.40 g/cm$^3$, more optionally 3.15 g/cm$^3$ to 3.35 g/cm$^3$.

10. The secondary battery according to any one of claims 1 to 9, wherein the active material layer of the negative electrode plate has a compacted density of 1.6 g/cm$^3$ to 1.70 g/cm$^3$, optionally 1.64 g/cm$^3$ to 1.69 g/cm$^3$.

11. The secondary battery according to any one of claims 1 to 10, wherein the secondary battery has an electrolyte injection coefficient of 2.5 g/Ah to 3.0 g/Ah, optionally 2.62 g/Ah to 2.90 g/Ah, and more optionally 2.70 g/Ah to 2.90 g/Ah.

12. The secondary battery according to any one of claims 1 to 11, wherein a surface of the first positive electrode active material is provided with a first coating layer, and optionally, the first coating layer comprises one or more elements of Ti, Al, B, Nb, Zr, Si, and W.

**13.** The secondary battery according to claim 12, wherein a thickness of the first coating layer is 20 nm to 150 nm.

**14.** The secondary battery according to any one of claims 1 to 13, wherein a surface of the second positive electrode active material is provided with a second coating layer, and optionally, the second coating layer comprises at least one of pyrophosphate, phosphate, and carbon.

**15.** The secondary battery according to claim 14, wherein a thickness of the second coating layer is 10 nm to 50 nm.

**16.** The secondary battery according to any one of claims 1 to 15, wherein a $D_v50$ particle size of the first positive electrode active material is 2.1 $\mu$m to 6.3 $\mu$m, optionally 3.5 $\mu$m to 4.9 $\mu$m; and/or
a $D_v50$ particle size of the second positive electrode active material is 0.25 $\mu$m to 1.49 $\mu$m, optionally 0.5 $\mu$m to 0.9 $\mu$m.

**17.** The secondary battery according to any one of claims 1 to 16, wherein in the second positive electrode active material, E comprises one or more elements of B, Si, N, and S.

**18.** The secondary battery according to any one of claims 1 to 17, wherein in the second positive electrode active material, A' comprises one or more elements of Fe, Ti, V, and Mg.

**19.** The secondary battery according to any one of claims 1 to 18, wherein the second positive electrode active material comprises a positive electrode active material satisfying at least one of the following conditions:

(i) y=1, and n=0, wherein the second positive electrode active material is $Li_{1+x}A'P_{1-z}E_zO_4$, wherein A' is element Fe, or A' comprises element Fe and one or more elements selected from Zn, Al, Na, K, Mg, Mo, W, Ti, V, Zr, Fe, Ga, Sn, Sb, Nb, and Ge; and
(ii) $0.001 \leq y \leq 0.500$, and n=0, wherein the second positive electrode active material is $Li_{1+x}Mn_{1-y}A'_yP_{1-z}E_zO_4$.

**20.** The secondary battery according to any one of claims 1 to 19, wherein the first positive electrode active material and the second positive electrode active material satisfy: $$0.02 \leq \frac{n_{(A')}}{n_{(N)}} \leq 1.4$$ , and $$0.15 \leq \frac{n_{(A')}}{n_{(P)}} \leq 1.50$$ , wherein $n_{(Ni)}$ is a molar amount of Ni in the positive electrode plate, measured in mol; $n_{(A')}$ is a molar amount of A' in the positive electrode plate, measured in mol; and $n_{(P)}$ is a molar amount of P in the positive electrode plate, measured in mol.

**21.** The secondary battery according to claim 20, wherein $$0.4 \leq \frac{n_{(A')}}{n_{(P)}} \leq 1.1$$ .

**22.** The secondary battery according to claim 20 or 21, wherein $$0.03 \leq \frac{n_{(A')}}{n_{(N)}} \leq 0.20$$ .

**23.** The secondary battery according to any one of claims 20 to 22, wherein

$0.001 \leq n_{(Ni)} \leq 0.0026$, optionally $0.0014 \leq n_{(Ni)} \leq 0.002$; and
$0.00007 \leq n_{(A')} \leq 0.00075$, optionally $0.0001 \leq n_{(A')} \leq 0.00032$.

**24.** An electric apparatus, comprising the secondary battery according to any one of claims 1 to 23.

# INTERNATIONAL SEARCH REPORT

| International application No. |
|---|
| **PCT/CN2023/074662** |

| A. | CLASSIFICATION OF SUBJECT MATTER |
|---|---|

H01M4/131(2010.01)i; H01M4/136(2010.01)i; H01M10/058(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; VEN; ENTXT; CNKI: 电池, 正极, 活性材料, 第一, 第二, 镍钴锰酸锂, 磷酸锰锂, 群裕度, 厚度, 层数, battery, positive electrode, active material, first, second, lithium nickel cobalt manganate, lithium manganese phosphate, group margin, thickness, number of layers

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 111446488 A (NINGDE CONTEMPORARY AMPEREX TECHNOLOGY CO., LTD.) 24 July 2020 (2020-07-24) description, paragraphs 28-121 | 1-24 |
| Y | CN 112349962 A (NINGDE CONTEMPORARY AMPEREX TECHNOLOGY CO., LTD.) 09 February 2021 (2021-02-09) description, paragraphs 13-17 | 1-24 |
| Y | WO 2021109080 A1 (NINGDE CONTEMPORARY AMPEREX TECHNOLOGY CO., LTD.) 10 June 2021 (2021-06-10) description, page 4, fourth-to-last paragraph to page 10, paragraph 6 | 1-24 |
| Y | JP 2017068958 A (TOYOTA INDUSTRIES CORP.) 06 April 2017 (2017-04-06) description, paragraphs 10-108 | 1-24 |
| Y | CN 114152882 A (SHANGHAI INSTITUTE OF SPACE POWER-SOURCES) 08 March 2022 (2022-03-08) description, paragraphs 5-26 | 1-24 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **23 October 2023** | **24 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/074662** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2002203606 A (SONY CORP.) 19 July 2002 (2002-07-19)<br>entire document | 1-24 |

Form PCT/ISA/210 (second sheet) (July 2022)

**INTERNATIONAL SEARCH REPORT**
Information on patent family members

International application No.

**PCT/CN2023/074662**

| Patent document cited in search report | | | Publication date (day/month/year) | Patent family member(s) | | | Publication date (day/month/year) |
|---|---|---|---|---|---|---|---|
| CN | 111446488 | A | 24 July 2020 | None | | | |
| CN | 112349962 | A | 09 February 2021 | WO | 2021023137 | A1 | 11 February 2021 |
| | | | | EP | 3989325 | A1 | 27 April 2022 |
| | | | | US | 2022158246 | A1 | 19 May 2022 |
| | | | | CN | 112349962 | B | 09 November 2021 |
| WO | 2021109080 | A1 | 10 June 2021 | EP | 3859824 | A1 | 04 August 2021 |
| | | | | US | 2021175511 | A1 | 10 June 2021 |
| | | | | CN | 114245940 | A | 25 March 2022 |
| JP | 2017068958 | A | 06 April 2017 | JP | 6638286 | B2 | 29 January 2020 |
| CN | 114152882 | A | 08 March 2022 | None | | | |
| JP | 2002203606 | A | 19 July 2002 | JP | 5052712 | B2 | 17 October 2012 |

Form PCT/ISA/210 (patent family annex) (July 2022)